# EUROPEAN PATENT APPLICATION

(11) **EP 4 800 449 A1**
(43) Date of publication of application: **02.09.2026**
(21) Application number: 26161037.2
(22) Date of filing: 26.02.2026
(51) Int. Cl.: G02B 6/12, G02B 6/13, G02F 1/035

(54) **OPTICAL CIRCUIT AND PRODUCTION METHOD OF THE SAME**

(30) Priority: 28.02.2025 JP 2025031075
(71) Applicant: NICHIA CORPORATION, Anan-shi, Tokushima 774-8601 (JP)
(72) Inventor: HATAKEYAMA, Koichiro, Anan-shi, Tokushima, 774-8601 (JP); ITO, Takumi, Anan-shi, Tokushima, 774-8601 (JP); OKADA, Masanori, Anan-shi, Tokushima, 774-8601 (JP); SANO, Masahiko, Anan-shi, Tokushima, 774-8601 (JP)
(74) Representative: Betten & Resch

(57) **Abstract**

An optical circuit includes a first optical waveguide including a first cladding layer, a second cladding layer, and a first core layer disposed between the first cladding layer and the second cladding layer; a second optical waveguide including a third cladding layer, a fourth cladding layer, and a second core layer disposed between the third cladding layer and the fourth cladding layer; and a third optical waveguide including a fifth cladding layer, a sixth cladding layer, and a third core layer disposed between the fifth cladding layer and the sixth cladding layer.

## Description

### TECHNICAL FIELD

The present disclosure relates to an optical circuit and a production method of the optical circuit.

### BACKGROUND

In the fields of optical communication and optical sensors, there is an increased demand for optical circuits in which semiconductor optical elements and optical waveguides are integrated on a substrate. In the optical circuits, a plurality of active optical waveguides, such as a laser light source, an optical modulator, a light receiving element, and the like, are optically coupled using passive optical waveguides. In a proposed configuration, a laser diode, an optical modulator, and a passive optical waveguide are provided on a support substrate including a cladding layer on the surface (see, for example, Japanese Patent Publication No. 2018-046258).

However, it is often difficult to form, on a common cladding layer, a plurality of active optical waveguides, such as a laser diode, an optical modulator, and the like, and passive optical waveguides. This is because a material of the active optical waveguide and a material of the passive optical waveguide are different from each other. Therefore, it is difficult to efficiently optically couple a plurality of active optical waveguides via passive optical waveguides.

It is an object of the present disclosure to provide an optical circuit capable of efficiently coupling a plurality of optical waveguides, and a production method of the optical circuit.

### SUMMARY

According to an aspect of the present disclosure, an optical circuit includes: a first optical waveguide including a first cladding layer, a second cladding layer, and a first core layer disposed between the first cladding layer and the second cladding layer; a second optical waveguide including a third cladding layer, a fourth cladding layer, and a second core layer disposed between the third cladding layer and the fourth cladding layer; and a third optical waveguide including a fifth cladding layer, a sixth cladding layer, and a third core layer disposed between the fifth cladding layer and the sixth cladding layer. The first cladding layer and the third cladding layer are provided on a first substrate. The fifth cladding layer is provided on a second substrate formed of a different material from a material of the first substrate. The third optical waveguide optically couples the first optical waveguide and the second optical waveguide to each other in a second direction that is different from a first direction in which the first optical waveguide and the second optical waveguide are disposed side by side.

According to another aspect of the present disclosure, a production method of an optical circuit includes: providing a first layered body on a first substrate, the first layered body including a first portion and a second portion in which the first portion includes a first cladding layer, a first core layer on the first cladding layer, and a second cladding layer on the first core layer, and the second portion includes a third cladding layer, a second core layer on the third cladding layer, and a fourth cladding layer on the second core layer; providing a second layered body on a second substrate, the second layered body including a fifth cladding layer, a third core layer on the fifth cladding layer, and a protective film on the third core layer; disposing the first layered body and the second layered body such that the first core layer and the second core layer face the third core layer, and adhering the second cladding layer, the fourth cladding layer, and the protective film to a temporary substrate; bonding the first substrate and the second substrate to a common substrate; removing the temporary substrate after bonding the first substrate and the second substrate to the common substrate; processing the first layered body to obtain a first optical waveguide including the first cladding layer, the first core layer, and the second cladding layer, and a second optical waveguide including the third cladding layer, the second core layer, and the fourth cladding layer; and processing the second layered body to obtain a third optical waveguide that includes at least the fifth cladding layer and the third core layer and is optically coupled to the first optical waveguide and the second optical waveguide.

According to the present disclosure, it is possible to efficiently couple a plurality of optical waveguides.

### BRIEF DESCRIPTION OF THE DRAWINGS

FIG. 1 is a plan view of an optical circuit according to a first embodiment of the present disclosure.
FIG. 2A is a cross-sectional view taken along the line IIA-IIA of FIG. 1.
FIG. 2B is a cross-sectional view taken along the line IIB-IIB of FIG. 1.
FIG. 3 is a cross-sectional view taken along the line III-III of FIG. 1.
FIG. 4 is a cross-sectional view of an optical circuit of a comparative structure.
FIG. 5A is a cross-sectional view of an optical circuit according to a first modified example of the first embodiment.
FIG. 5B is a cross-sectional view of the optical circuit according to the first modified example of the first embodiment.
FIG. 6 is a plan view of an optical circuit according to a second modified example of the first embodiment.
FIG. 7 is a cross-sectional view taken along the line VII-VII of FIG. 6.
FIG. 8 is a plan view of an optical circuit according to a second embodiment of the present disclosure.
FIG. 9A is a cross-sectional view illustrating a production method of an optical circuit according to the second embodiment.
FIG. 9B is a cross-sectional view illustrating the production method of the optical circuit according to the second embodiment.
FIG. 9C is a cross-sectional view illustrating the production method of the optical circuit according to the second embodiment.
FIG. 10A is a cross-sectional view illustrating the production method of the optical circuit according to the second embodiment.
FIG. 10B is a cross-sectional view illustrating the production method of the optical circuit according to the second embodiment.
FIG. 10C is a cross-sectional view illustrating the production method of the optical circuit according to the second embodiment.
FIG. 11A is a plan view illustrating the production method of the optical circuit according to the second embodiment.
FIG. 11B is a plan view illustrating the production method of the optical circuit according to the second embodiment.
FIG. 12A is a cross-sectional view illustrating the production method of the optical circuit according to the second embodiment.
FIG. 12B is a cross-sectional view illustrating the production method of the optical circuit according to the second embodiment.
FIG. 13A is a cross-sectional view illustrating the production method of the optical circuit according to the second embodiment.
FIG. 13B is a cross-sectional view illustrating the production method of the optical circuit according to the second embodiment.
FIG. 14A is a cross-sectional view illustrating the production method of the optical circuit according to the second embodiment.
FIG. 14B is a cross-sectional view illustrating the production method of the optical circuit according to the second embodiment.
FIG. 15A is a cross-sectional view illustrating the production method of the optical circuit according to the second embodiment.
FIG. 15B is a cross-sectional view illustrating the production method of the optical circuit according to the second embodiment.
FIG. 16A is a cross-sectional view illustrating the production method of the optical circuit according to the second embodiment.
FIG. 16B is a cross-sectional view illustrating the production method of the optical circuit according to the second embodiment.
FIG. 17A is a cross-sectional view illustrating the production method of the optical circuit according to the second embodiment.
FIG. 17B is a cross-sectional view illustrating the production method of the optical circuit according to the second embodiment.
FIG. 18A is a cross-sectional view illustrating the production method of the optical circuit according to the second embodiment.
FIG. 18B is a cross-sectional view illustrating the production method of the optical circuit according to the second embodiment.
FIG. 19A is a cross-sectional view illustrating the production method of the optical circuit according to the second embodiment.
FIG. 19B is a cross-sectional view illustrating the production method of the optical circuit according to the second embodiment.
FIG. 20 is a plan view illustrating an optical circuit according to a third embodiment of the present disclosure.
FIG. 21 is a plan view illustrating an optical circuit according to a first modified example of the third embodiment.
FIG. 22 is a plan view illustrating an optical circuit according to a second modified example of the third embodiment.
FIG. 23 is a plan view illustrating an optical circuit according to a third modified example of the third embodiment.

### DETAILED DESCRIPTION

Hereinafter, embodiments of the present disclosure will be described in detail with reference to the drawings. The embodiments described below are illustrative for embodying the technical ideas of the present invention, and should not be construed as limiting the present invention to the following configurations and numerical values. In the drawings, members having the same function are denoted by the same reference sign, and duplicate descriptions thereof may be omitted. The size, positional relationship, and the like of the members as illustrated in each drawing may be exaggerated for ease of understanding of the present invention.

### (First Embodiment)

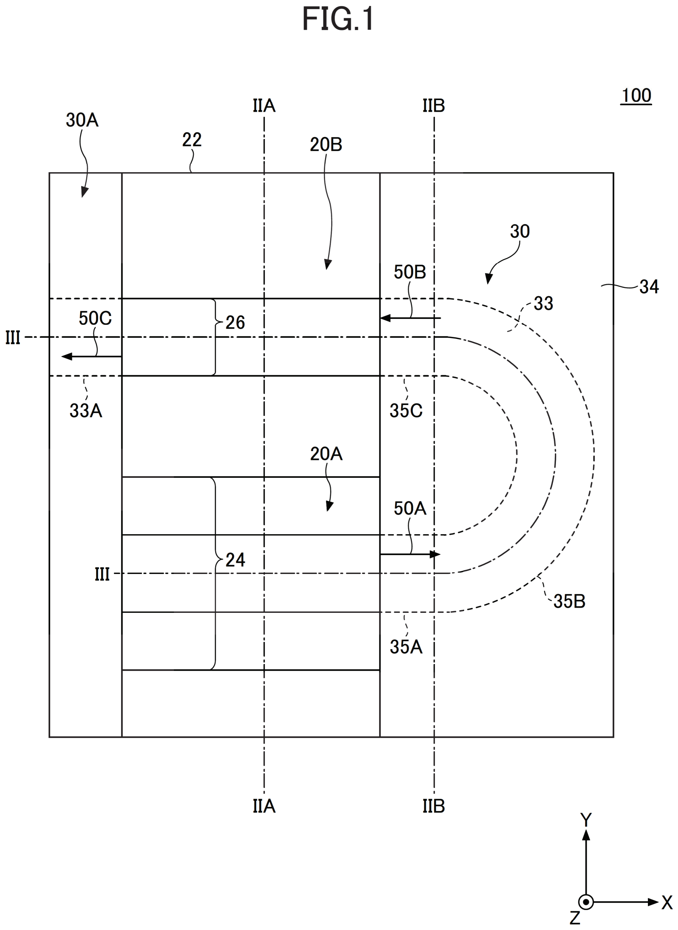

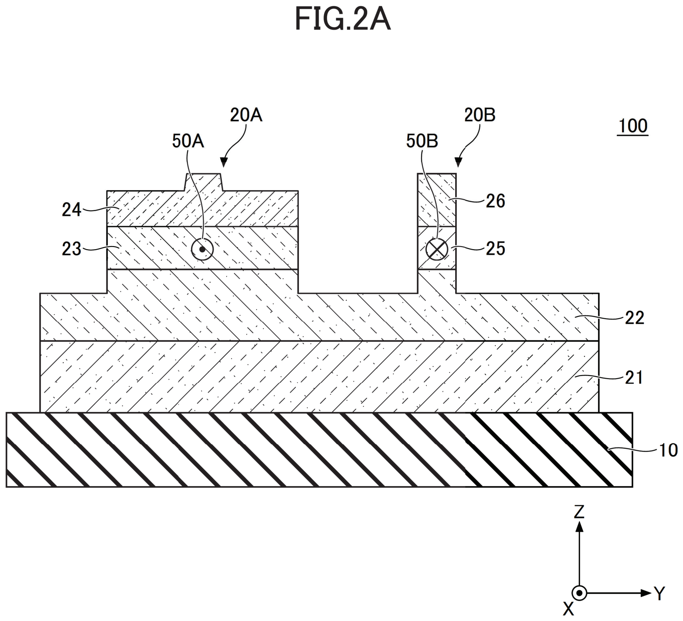

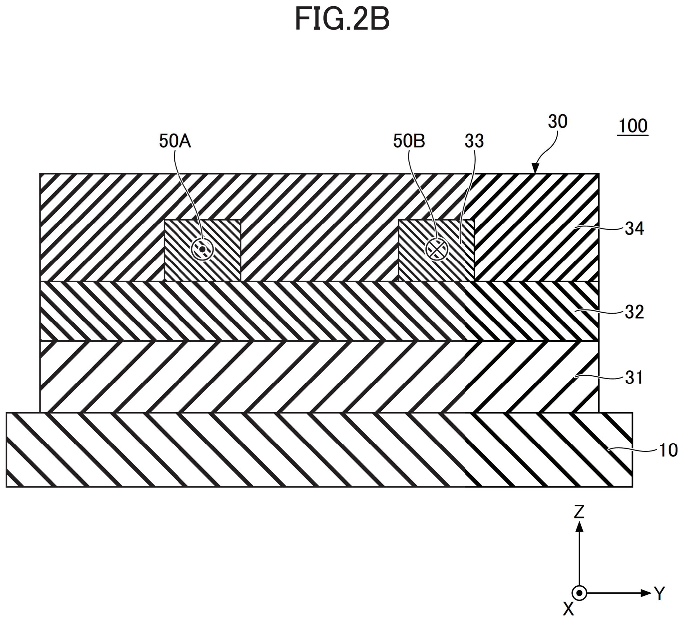

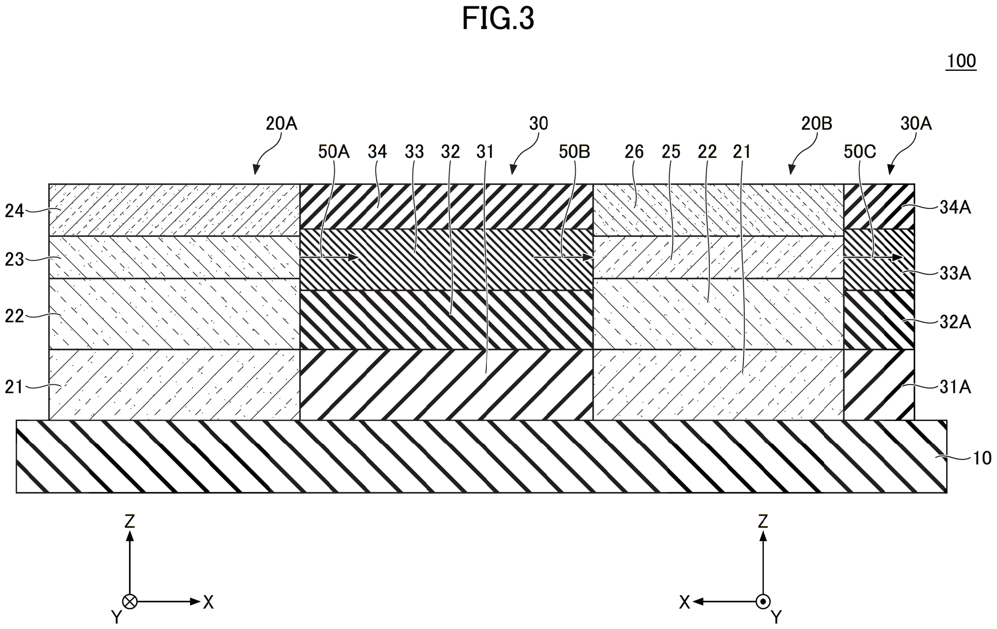

FIG. 1 is a plan view of an optical circuit according to a first embodiment of the present disclosure. FIG. 2A is a cross-sectional view taken along the line IIA-IIA of FIG. 1. FIG. 2B is a cross-sectional view taken along the line IIB-IIB of FIG. 1. FIG. 3 is a cross-sectional view taken along the line III-III of FIG. 1. A thickness direction of a substrate 10, i.e., a stacking direction of layers is defined as a Z direction. A direction in which optical waveguides 20A and 20B are disposed side by side is defined as a Y direction. A direction orthogonal to the Y direction and the Z direction is defined as an X direction. FIG. 3 illustrates the optical waveguides 20A and 20B in a cross section along an X-Z plane, and optical waveguides 30 and 30A in a cross section along a core layer 33.

As illustrated in FIG. 1 to 3, an optical circuit 100 includes the substrate 10 and the optical waveguides 20A, 20B, 30, and 30A. The optical waveguides 20A, 20B, 30, and 30A are disposed on the substrate 10. The optical waveguide 20A (i.e., a first optical waveguide) includes a substrate 21 (i.e., a first substrate), a cladding layer 22 (i.e., a first cladding layer), a core layer 23 (i.e., a first core layer), and a cladding layer 24 (i.e., a second cladding layer). The core layer 23 is disposed between the cladding layers 22 and 24. The cladding layer 22 is closer to the substrate 21 than the cladding layer 24 is. The optical axis of the optical waveguide 20A is in the X direction.

The optical waveguide 20B (i.e., a second optical waveguide) includes the substrate 21, the cladding layer 22 (i.e., a third cladding layer), a core layer 25 (i.e., a second core layer), and a cladding layer 26 (i.e., a fourth cladding layer). The core layer 25 is disposed between the cladding layers 22 and 26. The cladding layer 22 is closer to the substrate 21 than the cladding layer 26 is. The optical axis of the optical waveguide 20B is in the X direction.

The substrate 21 and the cladding layer 22 are shared by the optical waveguides 20A and 20B. That is, the cladding layer 22 of the optical waveguide 20A and the cladding layer 22 of the optical waveguide 20B are disposed on the same substrate 21. Also, the cladding layer 22 of the optical waveguide 20A and the cladding layer 22 of the optical waveguide 20B are the same cladding layer. The cladding layer 22 of the optical waveguide 20A and the cladding layer 22 of the optical waveguide 20B may include different cladding layers. The substrate 21 may function as a cladding layer along with the cladding layer 22. As the optical waveguides 20A and 20B, an optical waveguide having a ridge structure is illustrated as an example, but the optical waveguides 20A and 20B may be other refractive index waveguides or gain waveguides. In FIG. 2A, a ridge in the optical waveguide 20A refers to a projection formed in the cladding layer 24. A ridge in the optical waveguide 20B refers to a projection including the cladding layer 22, the core layer 25, and the cladding layer 26. In this manner, the ridge represents a projection that contributes to lateral confinement of the optical waveguides 20A and 20B. That is, the ridge represents a portion of a channel that projects beyond the other portions.

The optical waveguide 30 (i.e., a third optical waveguide) includes a substrate 31 (i.e., a second substrate), a cladding layer 32 (i.e., a fifth cladding layer), a core layer 33 (i.e., a third core layer), and a cladding layer 34 (i.e., a sixth cladding layer). The core layer 33 is disposed between the cladding layers 32 and 34. The cladding layer 32 is closer to the substrate 31 than the cladding layer 34 is.

The optical waveguide 30A (i.e., a fourth optical waveguide) includes a substrate 31A (i.e., a third substrate), a cladding layer 32A (i.e., a seventh cladding layer), a core layer 33A (i.e., a fourth core layer), and a cladding layer 34A (i.e., an eighth cladding layer). The core layer 33A is disposed between the cladding layers 32A and 34A. The cladding layer 32A is closer to the substrate 31A than the cladding layer 34A is.

For example, the substrate 21 and the substrates 31 and 31A are formed of different materials. The substrates 31 and 31A may be formed of the same material or different materials. As the optical waveguides 30 and 30A, FIG. 2B and 3 illustrate an example in which the lower ends of the ridges coincide with the lower ends of the core layers 33 and 33A. However, it is acceptable for the lower ends of the ridges not to coincide with the lower ends of the core layers 33 and 33A. The lower ends of the ridges preferably coincide with the lower ends of the core layers 33 and 33A or are preferably located in the cladding layers 32 and 32A. This can reduce bending loss.

The optical waveguides 20A and 20B are, for example, nitride semiconductor elements, and at least a portion of the substrate 21, the cladding layers 22, 24, and 26, and the core layers 23 and 25 includes a nitride semiconductor. The nitride semiconductor is, for example, GaN, AlN, InN, or a mixed crystal thereof, i.e., AlGaN, InGaN, AlInN, or AlInGaN. The core layers 23 and 25 are, for example, single crystal nitride semiconductor layers. The cladding layers 22, 24, and 26 are, for example, nitride semiconductor layers. The cladding layers 24 and 26 may be light-transmissive conductor layers. The light-transmissive conductor layers are, for example, an indium tin oxide (ITO) layer or an indium zinc oxide (IZO) layer.

The refractive index of the core layer 23 is higher than the refractive indices of the cladding layers 22 and 24. The refractive index of the core layer 25 is higher than the refractive indices of the cladding layers 22 and 26. Thus, light is confined in the core layers 23 and 25 in the Z direction. The cladding layers 22, 24, and 26 include at least one layer of an AlGaN layer, an AlInN layer, or an AlInGaN layer, each containing Al. The core layers 23 and 25 include, for example, at least one layer of a GaN layer or an InGaN layer.

When the optical waveguide 20A is a laser light source or a light receiving element, the cladding layer 22 includes, for example, AlₓGa₁₋ₓN (0≤x≤1). The cladding layer 24 includes, for example, AlₓGa₁₋ₓN (0≤x≤1) or a light-transmissive conductor material. The cladding layer 22 is of an n-type that is doped with Si, Ge, or the like, and the cladding layer 24 is of a p-type that is doped with Mg or the like. The dopant concentration of the cladding layer 22 is, for example, 1×10¹⁸ cm⁻³ or more and 5×10¹⁹ cm⁻³ or less. The cladding layers 22 and 24 may be free from impurities, and n-type or p-type cladding layers may be formed through polarization doping due to a gradient composition of the semiconductor layer. The dopant concentration of the cladding layer 24 is, for example, 1×10¹⁸ cm⁻³ or more and 1×10²⁰ cm⁻³ or less. The core layer 23 includes In_{z}Ga_{1-z}N (0≤z≤1) and an active layer having a quantum well structure. When the optical waveguide 20B is an optical modulator, the material of the cladding layer 26 is a nitride semiconductor, and the core layer 25 is a single layer of undoped GaN or includes a quantum well of Al_{y}Ga_{1-y}N (0≤y≤1) and In_{z}Ga_{1-z}N (0≤z≤1, excepting for y=0 and z=0). The term "undoped" refers to doping with impurities being not performed intentionally. Also, the term "undoped" includes a state in which unavoidable doping of impurities occurs. For example, the term "undoped" includes a state in which the impurity concentration is 1×10¹⁷ cm⁻³ or less. Also, the term "undoped" may refer to a state in which the impurity concentration is below a detection limit of secondary ion mass spectrometry (SIMS).

The optical waveguides 30 and 30A are, for example, passive optical waveguides. The substrates 31 and 31A are, for example, semiconductor or insulator substrates of silicon, sapphire, calcium fluoride, and the like. The cladding layers 32, 34, 32A, and 34A and the core layers 33 and 33A are amorphous or single crystal oxides, nitrides, or fluorides. The cladding layers 32, 34, 32A, and 34A and the core layers 33 and 33A are preferably amorphous. The cladding layers 32, 34, 32A, and 34A and the core layers 33 and 33A that are amorphous can reduce losses in the optical waveguides 30 and 30A compared to the cladding layers 32, 34, 32A, and 34A and the core layers 33 and 33A that are single crystals. The refractive index of the core layer 33 is higher than the refractive indices of the cladding layers 32 and 34. The refractive index of the core layer 33A is higher than the refractive indices of the cladding layers 32A and 34A. Thus, light is confined in the core layers 33 and 33A in the Z direction. Typically, nitrides have refractive indices higher than the refractive indices of oxides and fluorides. Therefore, the core layers 33 and 33A are preferably oxides or nitrides, and the cladding layers 32, 34, 32A, and 34A are preferably oxides or fluorides. By using the core layers 33 and 33A and the cladding layers 32, 34, 32A, and 34A that are amorphous, the refractive index of each of the layers can be readily adjusted, and the difference in refractive index between the core layers 33 and 33A and the cladding layers 32, 34, 32A, and 34A can be increased. This can enhance confinement of light in the core layers 33 and 33A. By enhancing the confinement of light, the bending loss of a curved waveguide can be reduced.

The cladding layers 32, 34, 32A, and 34A and the core layers 33 and 33A may be formed, for example, of SiO₂, SiN, SiON, Al₂O₃, AlN, AlON, Ta₂O₅, Nb₂O₅, TiO₂, HfO₂, ZrO₂, TaSiO, TaTiO, TaZrO, TaNbO, MgF₂, CaF₂, or any of mixtures of these materials.

The optical waveguide 30 includes waveguides 35A, 35B, and 35C. The waveguides 35A and 35C are straight waveguides, and the optical axes are in the X direction. The waveguide 35B is a curved waveguide, and the optical axis is curved, for example, along an arc-shaped curve. The waveguide 35A faces the optical waveguide 20A in the X direction. The waveguide 35C faces the optical waveguide 20B in the X direction. The optical axis of the waveguide 35A and the optical axis of the optical waveguide 20A are located coaxially, and the optical axis of the waveguide 35C and the optical axis of the optical waveguide 20B are located coaxially. This can improve the efficiency of optical coupling between the waveguide 35A and the optical waveguide 20A, and improve the efficiency of optical coupling between the waveguide 35C and the optical waveguide 20B. The coupling efficiency between the optical waveguides 20A and 30 and the coupling efficiency between the optical waveguides 20B and 30 are, for example, 50% or more and less than 100%, 75% or more and less than 100%, or 90% or more and less than 100%. The width of the waveguide 35A in the Y direction and the width of the optical waveguide 20A in the Y direction are preferably the same. The width of the waveguide 35C in the Y direction and the width of the optical waveguide 20B in the Y direction are preferably the same. This can facilitate coincidence between the optical axes in the Y direction. Note that the width of the waveguide may change between the waveguide 35A and the waveguide 35C.

For example, the optical waveguide 20A is a laser light source, the optical waveguide 30 is a passive optical waveguide, and the optical waveguide 20B is an optical modulator. In this case, laser light is incident from the optical waveguide 20A to the waveguide 35A in a +X direction as indicated by an arrow 50A. The laser light is curved by the waveguide 35B. The laser beam enters the optical waveguide 20B from the waveguide 35C in a -X direction as indicated by an arrow 50B. The laser beam exits the optical waveguide 20B in the -X direction as indicated by an arrow 50C.

The optical axis of the waveguide 35A and the optical axis of the optical waveguide 20A do not need to be located strictly coaxially. The optical axis of the waveguide 35C and the optical axis of the optical waveguide 20B do not need to be located strictly coaxially. The optical axes of the optically coupled waveguides may tolerate angular deviation in a range that enables optical coupling and may tolerate axial deviation in the X, Y, or Z direction. The angular deviation between the optical axes may be 10° or less, preferably 1° or less, and more preferably 0.5° or less. The axial deviation between the optical axes in the Y direction may be 50% or less, preferably 10% or less, and more preferably 1% or less of the smaller width, in the Y direction, of the two coupled optical waveguides. The axial deviation between the optical axes in the Z direction may be 50% or less, preferably 10% or less, and more preferably 1% or less of the smaller width, in the Z direction, of the two coupled optical waveguides.

### (Comparative Structure)

A plurality of active optical waveguides (e.g., a laser light source, an optical modulator, and a light receiving element) may be used in an optical circuit. By providing the plurality of active optical waveguides on the same substrate, the heights of the core layers can coincide with each other. Because the plurality of active optical waveguides are provided on the substrate to be away from each other, the plurality of active optical waveguides are coupled to each other through a passive optical waveguide. In this case, it is considered to form the passive optical waveguide on the same substrate as the active optical waveguide. However, the materials of the core layer and the cladding layer of the active optical waveguide are determined in accordance with the functions of the active optical waveguides. When the materials of the core layer and the cladding layer of the active optical waveguide are used as the materials of the core layer and the cladding layer of the passive optical waveguide, the loss of the passive optical waveguide is increased. Also, in some cases, it is difficult to provide the substrate of the active optical waveguide with the core layer and the cladding layer of the passive optical waveguide having small loss.

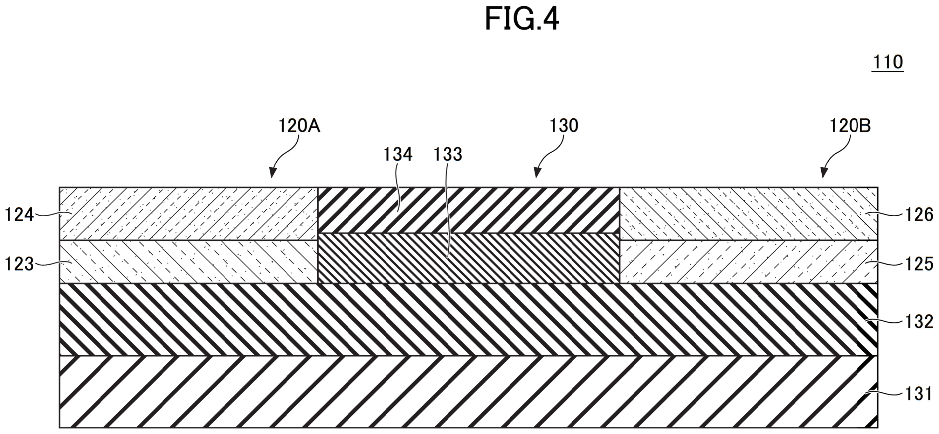

Hereinafter, the effects of the first embodiment will be described with reference to a comparative structure. The comparative structure is a structure described in Japanese Patent Publication No. 2018-046258. FIG. 4 is a cross-sectional view of an optical circuit of the comparative structure. As illustrated in FIG. 4, in an optical circuit 110 according to the comparative structure, optical waveguides 120A, 120B, and 130 are disposed on the same substrate 31. A cladding layer 132 of the optical waveguides 120A, 120B, and 130 is the same.

It is considered to attach, onto the cladding layer 132, a portion of the optical waveguide 120A (a portion above a core layer 123), a portion of the optical waveguide 120B (a portion above a core layer 125), and a portion of the optical waveguide 130 (a portion above a core layer 133). However, when the optical waveguides 120A and 120B include a nitride semiconductor, it is difficult to cut off the portions of the optical waveguides 120A and 120B above the core layers 123 and 125. Therefore, it is difficult to attach the portions of the optical waveguides 120A and 120B onto the cladding layer 132.

When the cladding layer 132 is used as a cladding layer of the optical waveguide 130, the cladding layer 132 is amorphous, and even if the core layers 123 and 125 of the nitride semiconductor are to be formed on the cladding layer 132, these cannot be formed normally.

When the cladding layer 132 is used as a cladding layer of the optical waveguides 120A and 120B, the cladding layer 132 is a nitride semiconductor. The nitride semiconductor has a high refractive index. Therefore, it is difficult to confine light in the core layer 133 of the optical waveguide 130.

When a nitride semiconductor is used as the core layer 133 for increasing the refractive index of the core layer 133, the core layers 123, 133, and 125 are grown separately. Here, along with regrowth of different nitride semiconductors, a non-flat portion is formed at the boundary of the regrowth. This reduces the coupling efficiency between the optical waveguides.

As described above, it is difficult to optically couple the plurality of optical waveguides 120A and 120B efficiently.

### (Description of First Embodiment)

According to the first embodiment, the cladding layer 22 of the optical waveguide 20A and the cladding layer 22 of the optical waveguide 20B are provided on the substrate 21. The cladding layer 32 of the optical waveguide 30 is provided on the substrate 31. The substrate 31 is formed of a different material from that of the substrate 21.

When the optical waveguide 30 is not provided on the substrate 21, the material of the substrate 21 can be a material suitable for forming the optical waveguides 20A and 20B. This can provide the functions of the optical waveguides 20A and 20B (e.g., a laser light source, an optical modulator, or a light emitting element). By forming the optical waveguide 30 on the substrate 31 formed of a different material from that of the substrate 21, the substrate 31 can be formed of a material suitable for forming the optical waveguide 30. This can provide the functions of the optical waveguide 30 (e.g., an optical waveguide with less loss).

Here, the description "different material" refers to a material of a different material type, as seen between nitride semiconductors, such as AlₓGa₁₋ₓN (0≤x≤1) and the like, and oxides and fluorides, such as SiO₂, Al₂O₃, MgF₂, and the like. Only when a mixed crystal ratio x is different, like in AlₓGa₁₋ₓN (0<x<1), the resulting material is treated as the "same material". However, when the mixed crystal ratio x is 0 or 1, i.e., GaN and AlN, are regarded as different materials. The same applies to other material types.

In the second direction (e.g., the X direction) different from the Y direction (i.e., the first direction) in which the optical waveguides 20A and 20B are disposed side by side, the optical waveguide 30 is optically coupled to the optical waveguide 20A and optically coupled to the optical waveguide 20B. Thus, even if the optical waveguides 20A and 20B are provided on the same substrate 21, the optical waveguides 20A and 20B can be coupled using the optical waveguide 30.

When the core layers 23 and 25 include a nitride semiconductor, it is difficult to form the optical waveguides 20A, 20B, and 30 on the substrate 31 as described with reference to the comparative structure. Therefore, it is preferable to use separate substrates, i.e., the substrate 21 and the substrate 31. For example, when the substrate 21 is a GaN substrate, the optical circuit tends to be expensive when a GaN substrate is used for the substrate 31 as well. Conversely, by using different materials for the substrate 21 and the substrate 31, an inexpensive substrate can be used for a portion in which a GaN substrate is unnecessary, thereby producing an optical circuit at a low cost. The core layers 23 and 25 may be formed of materials other than a nitride semiconductor.

The cladding layer 32A of the optical waveguide 30A is provided on the substrate 31A formed of a different material from that of the substrate 21. The substrate 31A is provided opposite to the substrate 31 with respect to the substrate 21. The optical waveguide 30A is optically coupled to the optical waveguide 20B. Thus, the optical waveguide 20B can be coupled to another optical waveguide 30A.

The core layers 33 and 33A and the cladding layers 32, 34, 32A, and 34A are formed of an oxide, a nitride, or a fluoride. This can reduce losses of the optical waveguides 30 and 30A. Also, the core layers 33 and 33A and the cladding layers 32, 34, 32A, and 34A are amorphous. This readily provides a difference in refractive index between the core layers 33 and 33A and the cladding layers 32, 34, 32A, and 34A, and thus readily forms a curved waveguide.

### (First Modified Example of First Embodiment)

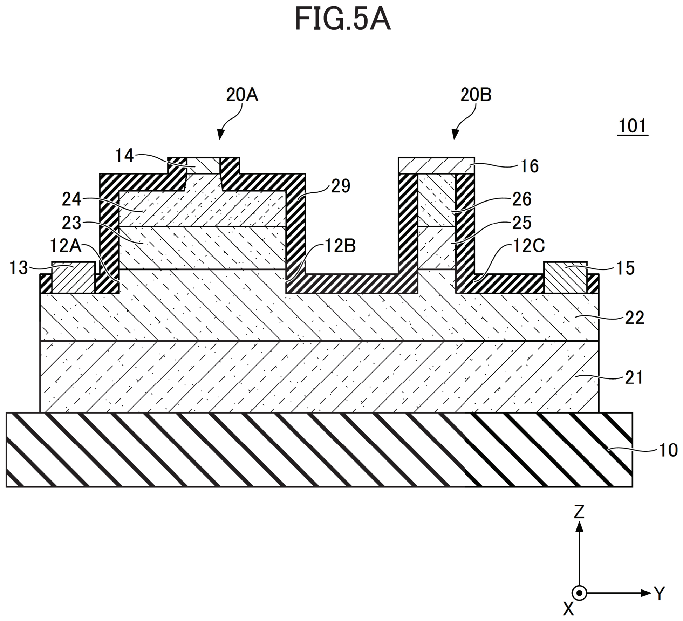

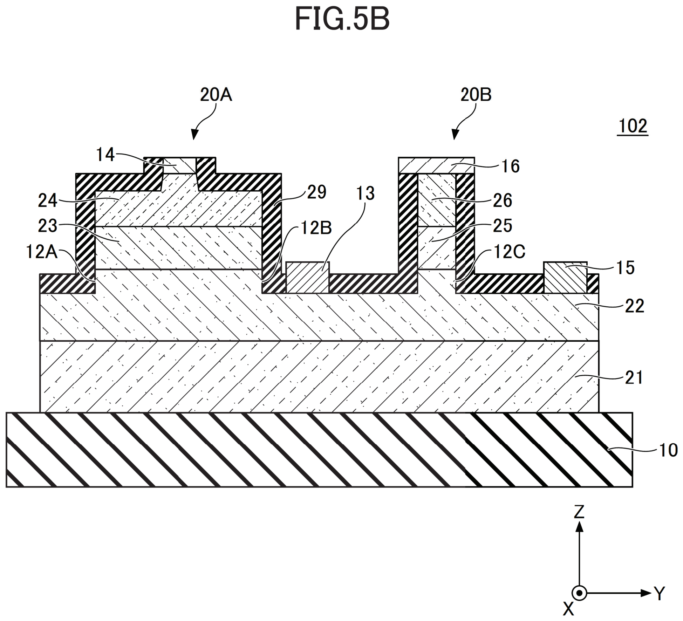

A first modified example of the first embodiment is an example in which electrodes electrically connected to the optical waveguides 20A and 20B are provided. FIG. 5A and 5B are cross-sectional views of an optical circuit according to the first modified example of the first embodiment. As illustrated in FIG. 5A and 5B, in optical circuits 101 and 102 according to the first modified example of the first embodiment, the common cladding layer 22 includes a recess 12A (i.e., a second recess), a recess 12B (i.e., a first recess), and a recess 12C (i.e., a third recess). The recess 12B is disposed between the optical waveguides 20A and 20B. The recess 12A is disposed opposite to the recess 12B with the optical waveguide 20A being interposed between the recess 12A and the recess 12B. The recess 12C is disposed opposite to the recess 12B with the optical waveguide 20B being interposed between the recess 12B and the recess 12C. The recesses 12A, 12B and 12C are portions in which the bottom surfaces are lower than the interface between the cladding layer 22 and the core layers 23 and 25. The recesses 12A, 12B and 12C do not need to be entirely enclosed by a wall, and may be partially enclosed by a wall.

An electrode 13 (i.e., a first electrode) and an electrode 15 (i.e., a third electrode) are provided in one of the recesses 12A, 12B and 12C of the cladding layer 22, and electrically connected to the cladding layer 22. The electrode 13 is connected to the cladding layer 22 of the optical waveguide 20A, and the electrode 15 is connected to the cladding layer 22 of the optical waveguide 20B. An electrode 14 (i.e., a second electrode) is provided on the cladding layer 24 and electrically connected to the cladding layer 24. An electrode 16 (i.e., a fourth electrode) is provided on the cladding layer 26 and electrically connected to the cladding layer 26.

In the optical circuit 101 of FIG. 5A, the electrodes 13 and 15 are provided in the recesses 12A and 12C, respectively. In the optical circuit 102 of FIG. 5B, the electrodes 13 and 15 are provided in the recesses 12B and 12C, respectively.

According to the first modified example of the first embodiment, the cladding layer 22 of the optical waveguide 20A and the cladding layer 22 of the optical waveguide 20B are the monolithic cladding layer 22. The electrodes 13 and 15 are connected to the cladding layer 22, and the electrodes 14 and 16 are respectively connected to the cladding layers 24 and 26. By using the monolithic cladding layer 22, the cladding layer 22 can be used as a ground layer, and electrical noise can be reduced.

The electrode 13 is disposed in the recess 12A or the recess 12B, and the electrode 15 is disposed in the recess 12B or the recess 12C. Thus, the electrode 13 can be disposed near the optical waveguide 20A, and the electrode 15 can be disposed near the optical waveguide 20B. Therefore, it is possible to reduce parasitic resistance between the electrode 13 and the optical waveguide 20A and parasitic resistance between the electrode 15 and the optical waveguide 20B.

When the monolithic cladding layer 22 is used, the difference between the thickness of the core layer 23 and the thickness of the core layer 25 is preferably 100 nanometers (nm) or less. Thus, the position of the center of the core layer 23 in the Y direction and the position of the center of the core layer 25 in the Y direction are close to each other. Therefore, it is possible to increase the coupling efficiency between the optical waveguides 20A and 20B via the optical waveguide 30.

### (Second Modified Example of First Embodiment)

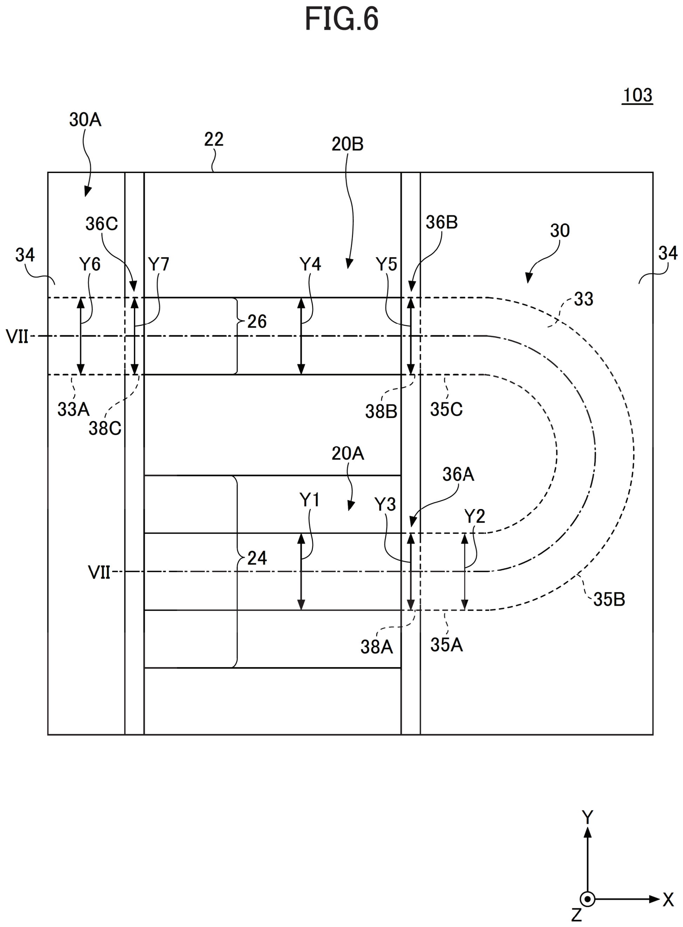

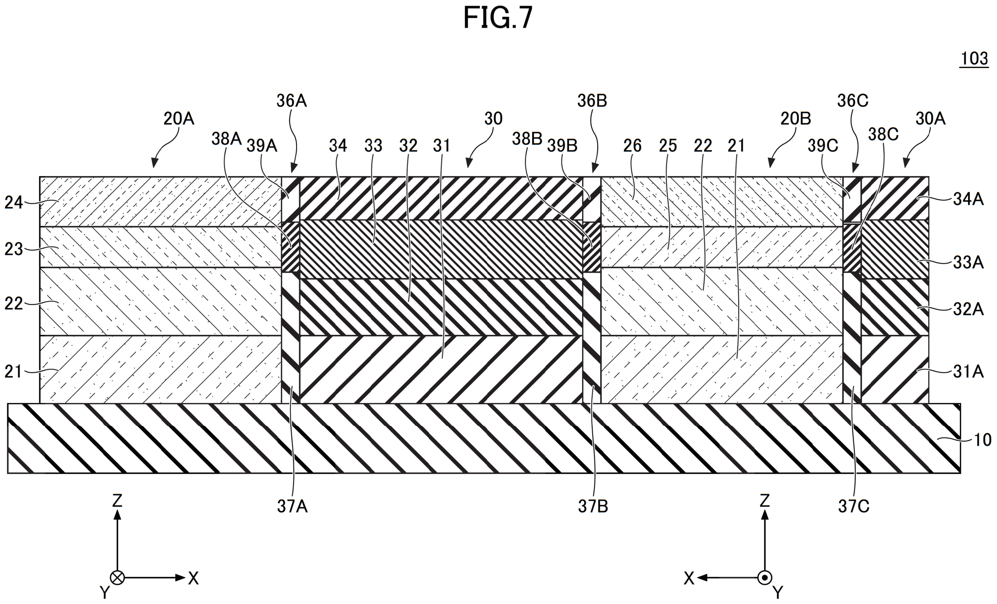

A second modified example of the first embodiment is an example in which an amorphous optical waveguide is provided between the optical waveguides 20A and 20B and the optical waveguide 30. FIG. 6 is a plan view of an optical circuit according to the second modified example of the first embodiment. FIG. 7 is a cross-sectional view taken along the line VII-VII of FIG. 6. As illustrated in FIG. 6 and 7, an amorphous optical waveguide 36A (i.e., a first amorphous optical waveguide) is disposed between the optical waveguides 20A and 30. An amorphous optical waveguide 36B (i.e., a second amorphous optical waveguide) is disposed between the optical waveguides 20B and 30. An amorphous optical waveguide 36C is disposed between the optical waveguides 20B and 30A.

The amorphous optical waveguide 36A includes a cladding layer 37A, a core layer 38A, and a cladding layer 39A. The core layer 38A is disposed between the cladding layers 37A and 39A. The amorphous optical waveguide 36B includes a cladding layer 37B, a core layer 38B, and a cladding layer 39B. The core layer 38B is disposed between the cladding layers 37B and 39B.

For example, the materials of the amorphous optical waveguides 36A to 36C are the same as the materials of the optical waveguides 30 and 30A. At least a portion of the amorphous optical waveguide 36A, at least a portion of the amorphous optical waveguide 36B, and at least a portion of the amorphous optical waveguide 36C include an amorphous material. The refractive indices of the core layers 38A to 38C are higher than the refractive indices of the cladding layers 37A to 37C and 39A to 39C. Thus, light can be confined in the core layers 38A to 38C.

When the optical waveguide 20A and the optical waveguide 30 are optically coupled, as the refractive indices of the core layers 23 and 33 are different, light is readily reflected between the optical waveguides 20A and 30. For example, when the optical waveguide 20A includes a nitride semiconductor, the refractive index of the core layer 23 is higher than the refractive index of the core layer 33. Therefore, the refractive index of the core layer 38A is set to be lower than the refractive index of the core layer 23 and higher than the refractive index of the core layer 33. This can reduce reflection of light between the optical waveguides 20A and 30. The refractive indices of the cladding layers 37A and 39A are set to be lower than the refractive indices of the cladding layers 22 and 24 and higher than the refractive indices of the cladding layers 32 and 34. This can reduce reflection of light between the optical waveguides 20A and 30. Amorphous materials can be readily controlled for refractive index by adjusting their compositions. Therefore, the core layers 38A to 38C and the cladding layers 37A to 37C and 39A to 39C can be formed of an amorphous material.

For reducing the reflection of light between the optical waveguides 20B and 30, the refractive index of the core layer 38B is set to be lower than the refractive index of the core layer 25 and higher than the refractive index of the core layer 33. The refractive indices of the cladding layers 37B and 39B are set to be lower than the refractive indices of the cladding layers 22 and 26 and higher than the refractive indices of the cladding layers 32 and 34. This can reduce the reflection of light between the optical waveguides 20B and 30.

When a width Y1 of the optical waveguide 20A in the Y direction is the same as a width Y2 of the optical waveguide 30 in the Y direction, a width Y3 of the amorphous optical waveguide 36A in the Y direction is set to be the same as the width Y1 and the width Y2. This can increase the coupling efficiency of a transverse mode between the optical waveguides 20A and 30 compared to the width Y3 being different from the width Y1 and the width Y2. Because the optical waveguide 20A has a ridge structure, the width of the ridge of the cladding layer 24 is defined as the width Y1 of the optical waveguide 20A. The width of the core layer 33 is defined as the width Y2 of the optical waveguide 30, and the width of the core layer 38A is defined as the width Y3 of the amorphous optical waveguide 36A. Here, the width Y3 being the same as the width Y1 means that the width Y3 is ±10% of the width Y1. Similarly, the width of one of the optically coupled optical waveguides being the same as the width of the other optical waveguide means that the width of the one optical waveguide is ±10% of the width of the other optical waveguide.

Similarly, when a width Y4 of the optical waveguide 20B in the Y direction is the same as the width Y2 of the optical waveguide 30 in the Y direction, a width Y5 of the amorphous optical waveguide 36B in the Y direction is set to be the same as the width Y2 and the width Y4. This can increase the coupling efficiency of a transverse mode between the optical waveguides 20B and 30 compared to the width Y5 being different from the width Y4 and the width Y2.

Similarly, when the width Y4 of the optical waveguide 20B in the Y direction is the same as a width Y6 of the optical waveguide 30A in the Y direction, a width Y7 of the amorphous optical waveguide 36C in the Y direction is set to be the same as the width Y4 and the width Y6. This can increase the coupling efficiency of a transverse mode between the optical waveguides 20B and 30A compared to the width Y7 being different from the width Y4 and the width Y6.

Also, when the difference between the width Y1 of the optical waveguide 20A in the Y direction and the width Y2 of the optical waveguide 30 in the Y direction is large, mismatch in the transverse mode tends to occur between the optical waveguides 20A and 30. In this case, the width Y3 of the amorphous optical waveguide 36A in the Y direction is set to be between the width Y1 and the width Y2. This can increase the coupling efficiency of the transverse mode between the optical waveguides 20A and 30.

Similarly, when the width Y4 of the optical waveguide 20B is different from the width Y2 of the optical waveguide 30, the width Y7 of the amorphous optical waveguide 36B in the Y direction is set to be between the width Y4 of the optical waveguide 20B and the width Y6 of the optical waveguide 30. This can increase the coupling efficiency of a transverse mode between the optical waveguides 20B and 30.

Also, end surfaces of the optical waveguides 20A and 20B may be inclined in the crystal orientation. In this case, due to the inclined surfaces, the end surfaces of the optical waveguides 20A and 20B cannot sufficiently come close to the end surfaces of the optical waveguide 30. This can reduce the coupling efficiency between the optical waveguides 20A and 30, the coupling efficiency between the optical waveguides 20B and 30, and the coupling efficiency between the optical waveguides 20B and 30A. Therefore, by providing the amorphous optical waveguides 36A to 36C, it is possible to increase the optical coupling efficiency. This is because the amorphous optical waveguides 36A to 36C can be formed to fill the gap between the optical waveguide 20A and the optical waveguide 30 and the gap between the optical waveguide 20B and the optical waveguide 30.

### (Second Embodiment)

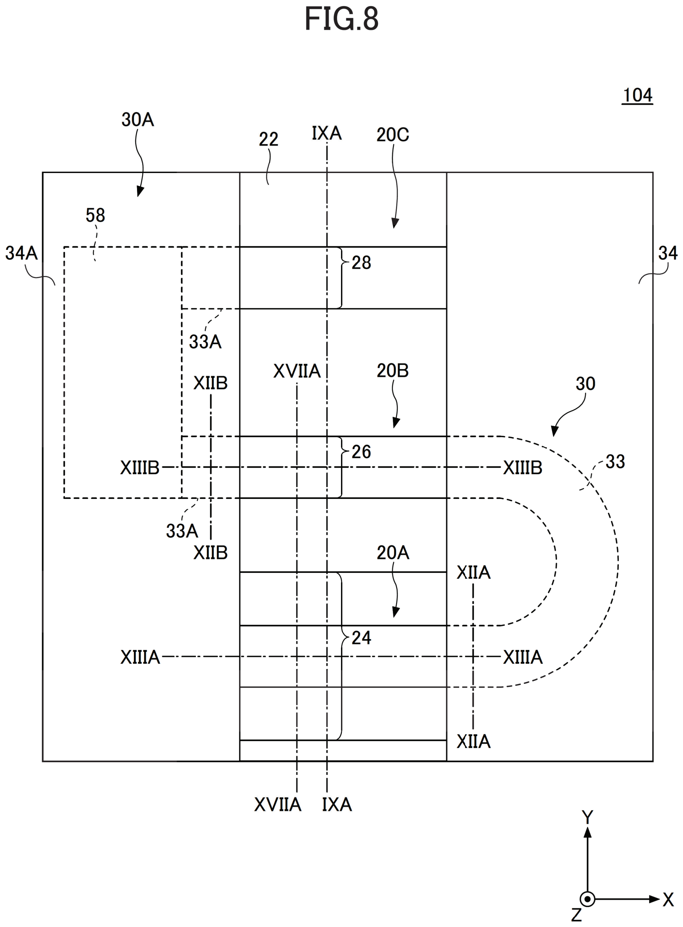

A second embodiment of the present disclosure is an embodiment for describing a production method of an optical circuit. FIG. 8 is a plan view of an optical circuit according to the second embodiment. As illustrated in FIG. 8, an optical circuit 104 according to the second embodiment includes an optical waveguide 20C and an optical circuit portion 58 in addition to the optical circuit of the first embodiment.

The optical waveguide 20C includes a core layer 27 and cladding layers 22 and 28. The core layer 27 is disposed between the cladding layers 22 and 28. The cladding layer 22 is closer to the substrate 21 than the cladding layer 28 is. The optical circuit portion 58 is formed by the optical waveguide 30A. The optical waveguide 20A is, for example, a laser light source, the optical waveguide 20B is, for example, an optical modulator, and the optical waveguide 20C is, for example, a light receiving element. The optical circuit portion 58 may have a desired function, such as an interferometer, a resonator, a wavelength selective filter, an optical switch, an optical isolator, or the like.

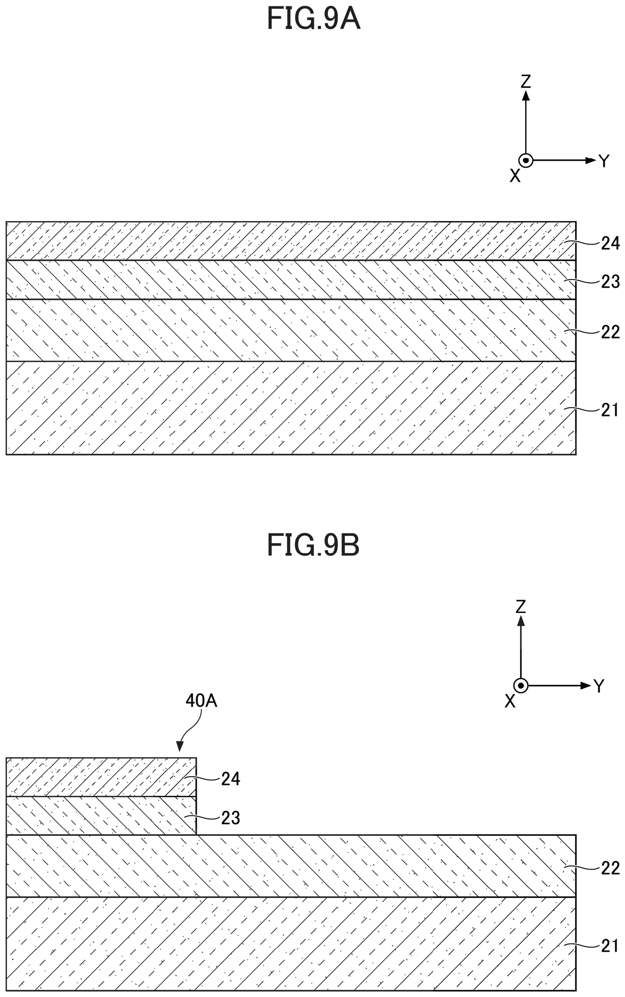

FIG. 9A to 10C are cross-sectional views illustrating the production method of the optical circuit according to the second embodiment, and corresponding to the cross section taken along the IXA-IXA line of FIG. 8.

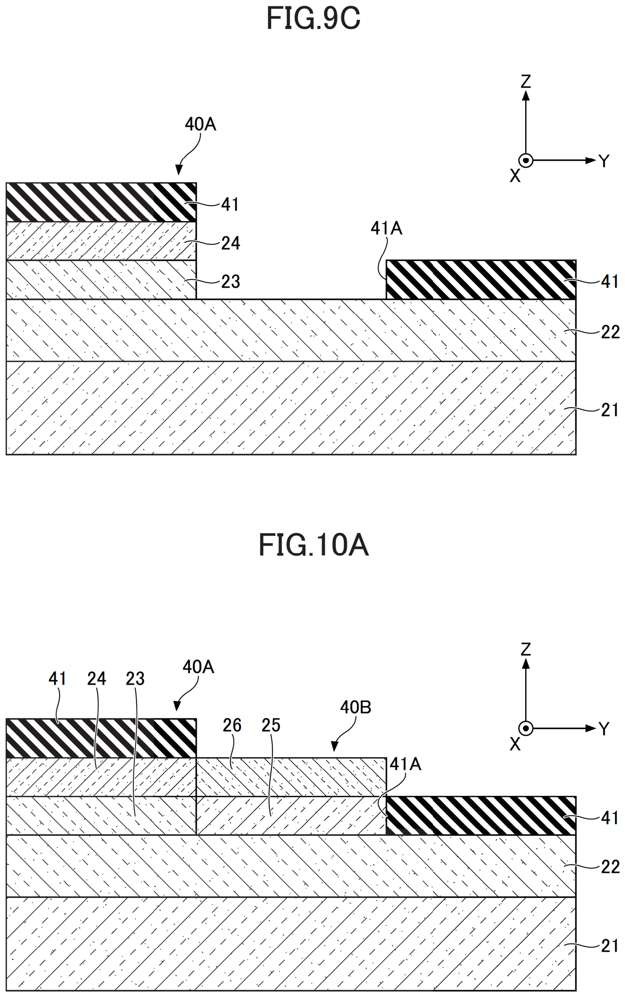

As illustrated in FIG. 9A, the substrate 21 is provided. The substrate 21 is an insulator substrate or a semiconductor substrate, such as a GaN substrate. The cladding layer 22 is formed on the substrate 21, the core layer 23 is formed on the cladding layer 22, and the cladding layer 24 is formed on the core layer 23. For the formation of the cladding layer 22, the core layer 23, and the cladding layer 24, metal organic chemical vapor deposition (MOCVD) or the like is used. As illustrated in FIG. 9B, a portion of the core layer 23 and a portion of the cladding layer 24 are removed through etching. This forms a layered structure 40A including the cladding layer 22, the core layer 23, and the cladding layer 24. As illustrated in FIG. 9C, a patterned mask layer 41 is formed on the cladding layers 22 and 24. The mask layer 41 has an opening 41A. The mask layer 41 is formed, for example, of an inorganic material, e.g., a silicon oxide layer or the like.

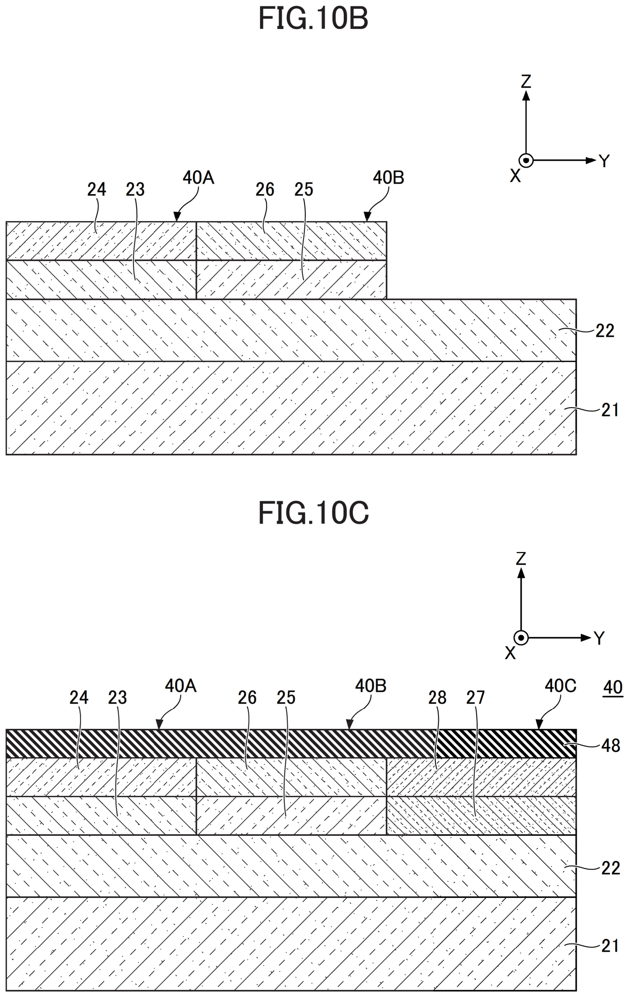

As illustrated in FIG. 10A, the core layer 25 and the cladding layer 26 are sequentially selectively formed on the cladding layer 22 in the opening 41A. The core layer 25 and the cladding layer 26 are formed through MOCVD or the like. This forms a layered structure 40B including the cladding layer 22, the core layer 25, and the cladding layer 26. As illustrated in FIG. 10B, the mask layer 41 is removed. Subsequently, by forming a mask layer, forming the core layer 27 and the cladding layer 28, and removing the mask layer, a layered body 40 as illustrated in FIG. 10C is obtained. Thus, the core layer 27 is formed on the cladding layer 22, and the cladding layer 28 is formed on the core layer 27. This forms a layered structure 40C including the cladding layer 22, the core layer 27, and the cladding layer 28. The layered body 40 including the layered structures 40A to 40C is formed. Although no particular limitation is imposed on the relationship in height of the core layers 23, 25, and 27 of the layered structures 40A to 40C, the core layers 23, 25, and 27 are preferably the same in height. In this manner, when the optical waveguides 30 and 30A are formed to have the same height, optical coupling with the optical waveguides 20A, 20B, and 20C is possible, which facilitates production. A protective film 48 may be formed on the layered body 40. The protective film 48 is, for example, an inorganic insulator film, such as a silicon oxide film or the like.

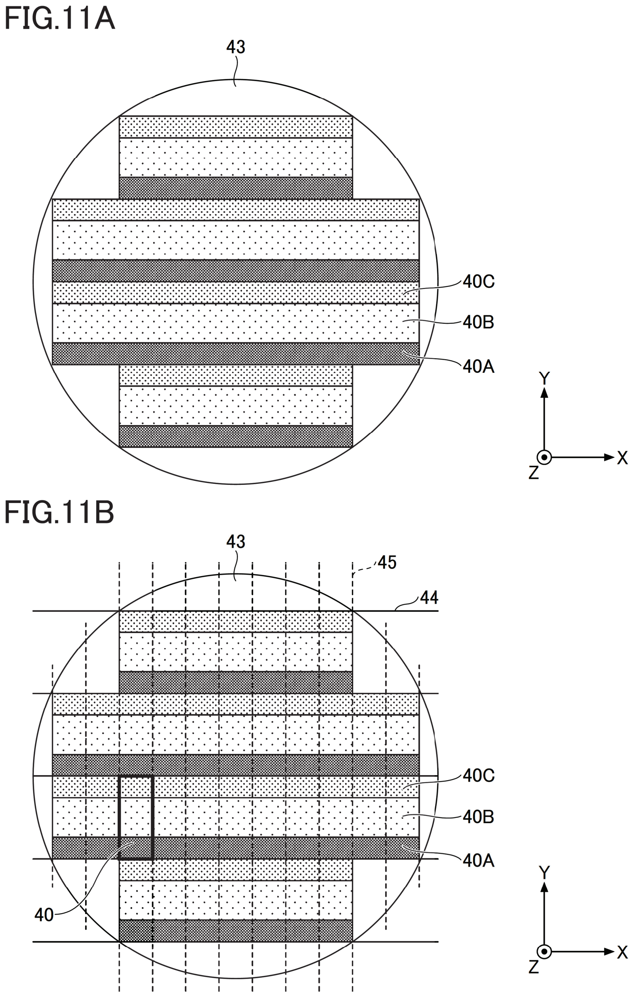

FIG. 11A and 11B are plan views illustrating the production method of the optical circuit according to the second embodiment. As illustrated in FIG. 11A, the layered structures 40A to 40C are formed on a wafer 43. The layered structures 40A to 40C are arranged in a repeating pattern in the Y direction. As illustrated in FIG. 11B, the wafer 43 is divided at lines 44 and 45. Dividing of the wafer 43 is performed through cutting or cleaving. For example, the wafer is cut along the line 44 and cleaved along the line 45. This forms a plurality of the layered bodies 40.

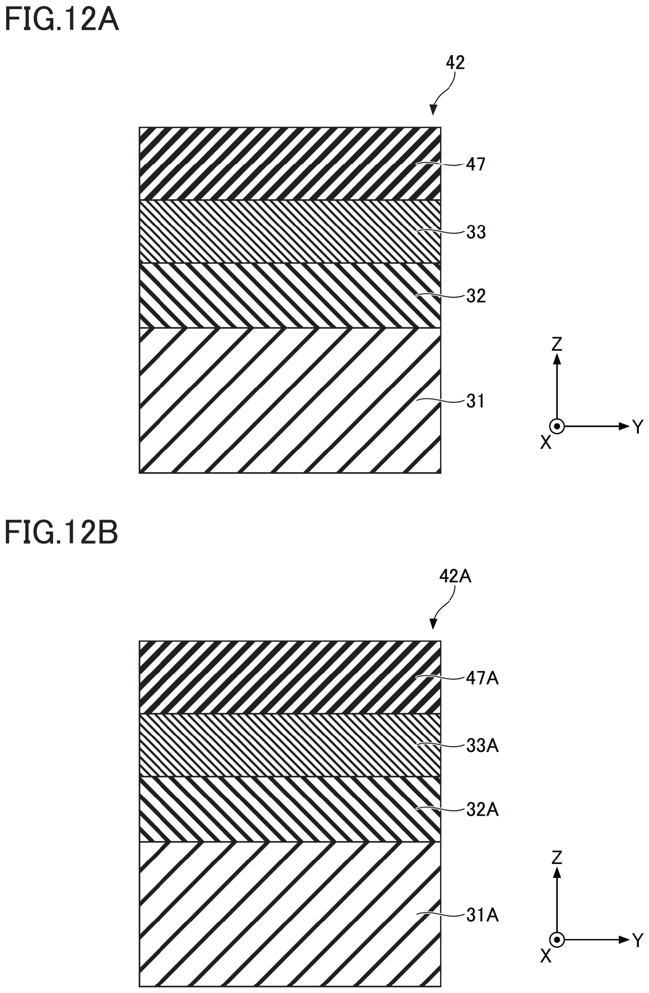

FIG. 12A and 12B are cross-sectional views illustrating the production method of the optical circuit according to the second embodiment. Specifically, FIG. 12A is a cross-sectional view in a direction along the line XIIA-XIIA of FIG. 8 illustrating a production process, and FIG. 12B is a cross-sectional view in a direction along the line XIIB-XIIB of FIG. 8 illustrating a production process. As illustrated in FIG. 12A, the cladding layer 32 is formed on the substrate 31, the core layer 33 is formed on the cladding layer 32, and the protective film 47 is formed on the core layer 33. This forms a layered body 42 including the cladding layer 32, the core layer 33, and the protective film 47. As illustrated in FIG. 12B, the cladding layer 32A is formed on the substrate 31A, the core layer 33A is formed on the cladding layer 32A, and the protective film 47A is formed on the core layer 33A. This forms a layered body 42A including the cladding layer 32A, the core layer 33A, and the protective film 47A.

The cladding layers 32 and 32A, the core layers 33 and 33A, and the protective films 47 and 47A are formed through chemical vapor deposition (CVD) or physical vapor deposition (PVD). The protective films 47 and 47A are, for example, inorganic insulator films, such as silicon oxide films or the like. The layered bodies 42 and 42A may be subjected to a thermal treatment. The thermal treatment can reduce losses of the core layers 33 and 33A.

In this manner, by forming the layered body 40 separately from the layered bodies 42 and 42A, it is possible to reduce thermal damage to the layered bodies compared to the layered bodies being formed as a single layered body.

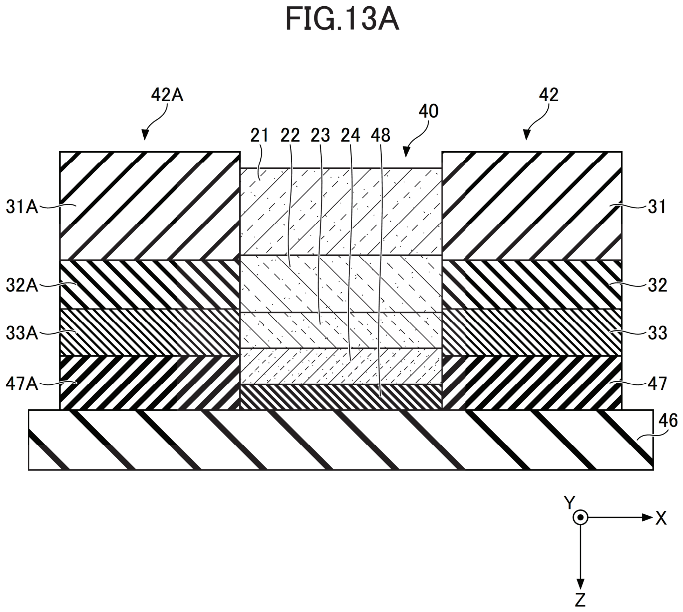

FIG. 13A to 16B are cross-sectional views illustrating the production method of the optical circuit according to the second embodiment. FIG. 13A, 14A, 15A, and 16A are cross-sectional views illustrating the production process in a direction along the XIIIA-XIIIA line of FIG. 8, and FIG. 13B, 14B, 15B, and 16B are cross-sectional views illustrating the production process in a direction along the XIIIB-XIIIB line of FIG. 8. FIG. 13A to 15B are illustrated upside down (in the Z direction).

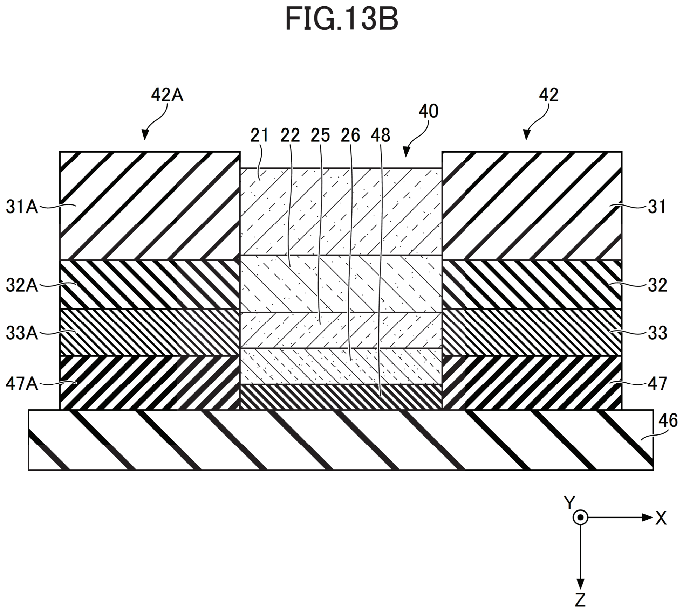

As illustrated in FIG. 13A and 13B, a temporary substrate 46 is provided. The temporary substrate 46 is, for example, a semiconductor substrate, such as a silicon substrate or the like, or an insulator substrate. The end surface of the layered body 42 in the -X direction is brought into contact with the end surface of the layered body 40 in the +X direction. Thus, the end surface of the core layer 23 in the +X direction faces the end surface of the core layer 33 in the -X direction, and the end surface of the core layer 25 in the +X direction faces the end surface of the core layer 33 in the -X direction. The end surface of the layered body 42A in the +X direction is brought into contact with the end surface of the layered body 40 in the -X direction. Thus, the end surface of the core layer 25 in the -X direction faces the end surface of the core layer 33A in the +X direction. In this state, the layered bodies 40, 42, and 42A are adhered to the temporary substrate 46. The temporary substrate 46 and the layered bodies 40, 42 and 42A are adhered, for example, through atomic diffusion bonding, hydroxy group bonding, or surface activated bonding.

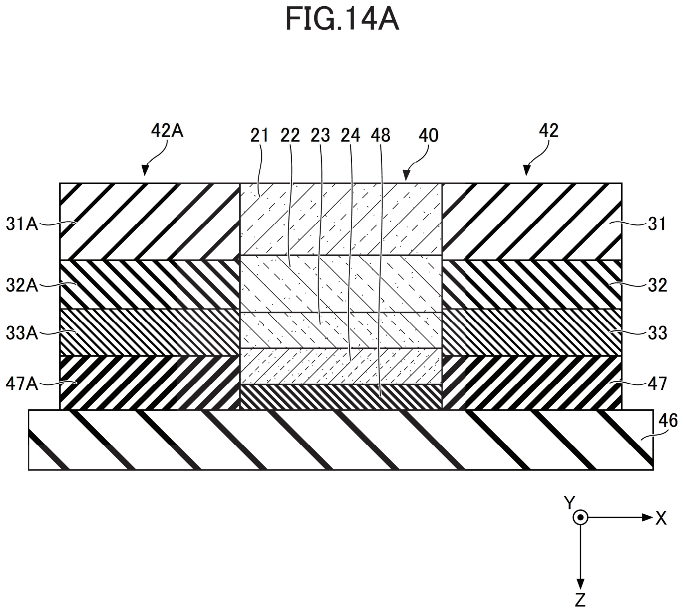

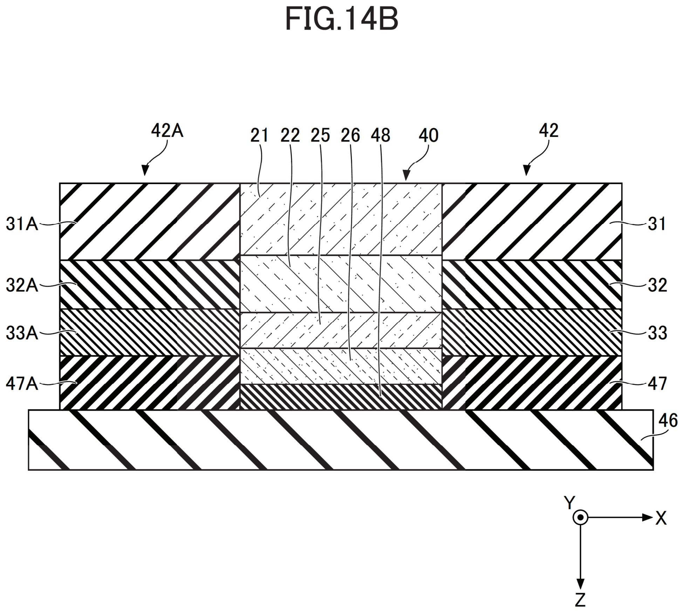

As illustrated in FIG. 14A and 14B, the layered bodies 40, 42, and 42A are adjusted to have the same height by polishing at least one of the substrate 21, 31, or 31A. The layered bodies 40, 42, and 42A may be adjusted to have the same height by polishing at least one of the substrate 21, 31, or 31A before fixing the layered bodies 40, 42, and 42A to the temporary substrate 46.

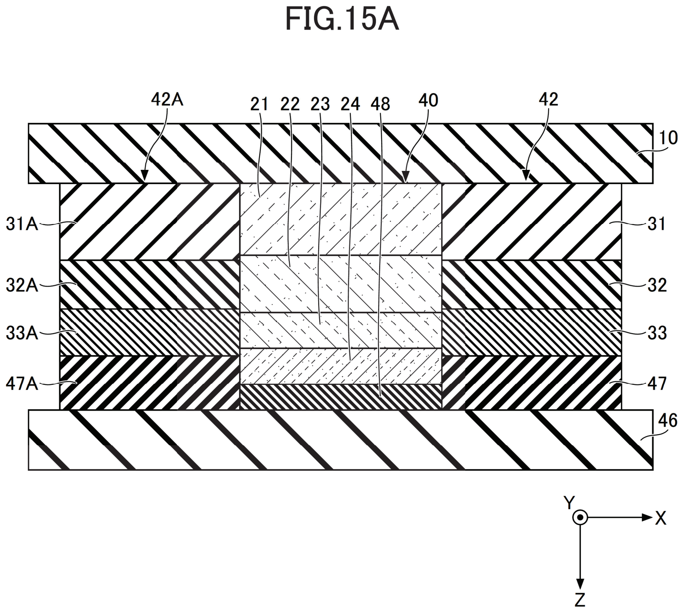

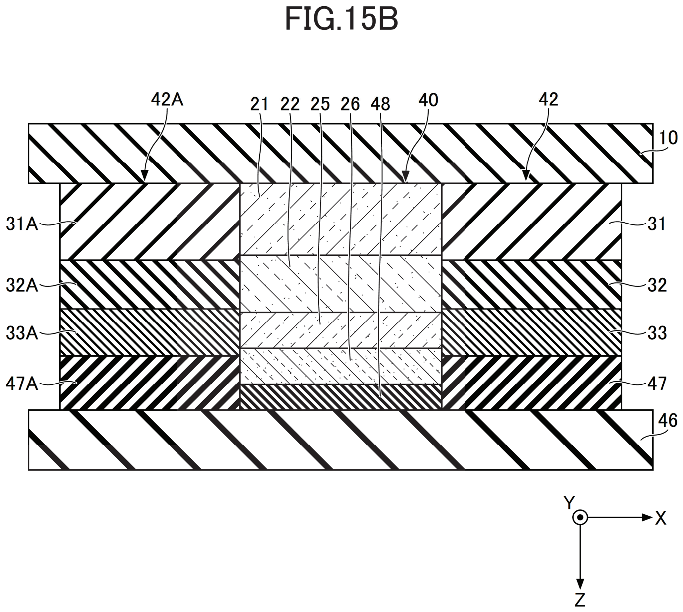

As illustrated in FIG. 15A and 15B, the substrate 10 is bonded to a surface of the layered bodies 40, 42, and 42A opposite to the temporary substrate 46 across the layered bodies 40, 42, and 42A. The layered bodies 40, 42 and 42A are bonded to the substrate 10, for example, through surface activated bonding, atomic diffusion bonding, or hydroxy group bonding. From the viewpoint of reducing thermal stress, the bonding of the temporary substrate 46 to the layered bodies 40, 42, and 42A and the bonding of the layered bodies 40, 42, and 42A to the substrate 10 are preferably performed at a relatively low temperature. From this viewpoint, surface activated bonding or atomic diffusion bonding is preferably used. The temperature at the bonding step may be, for example, 90°C or lower, 70°C or lower, 50°C or lower, or 40°C or lower.

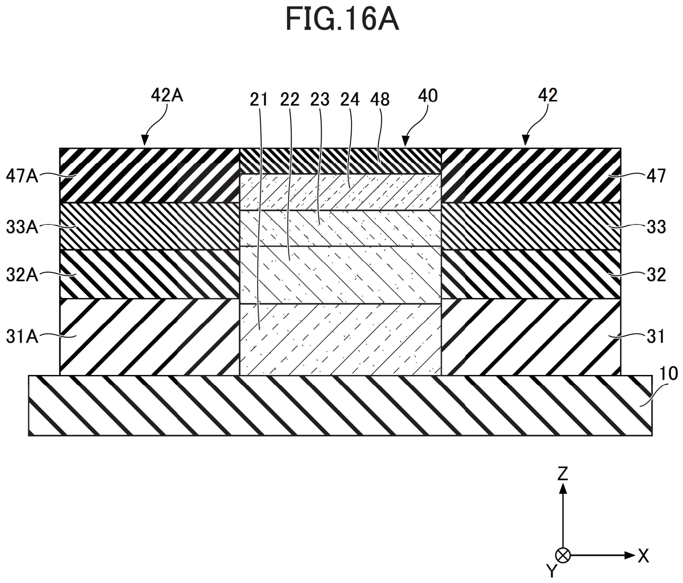

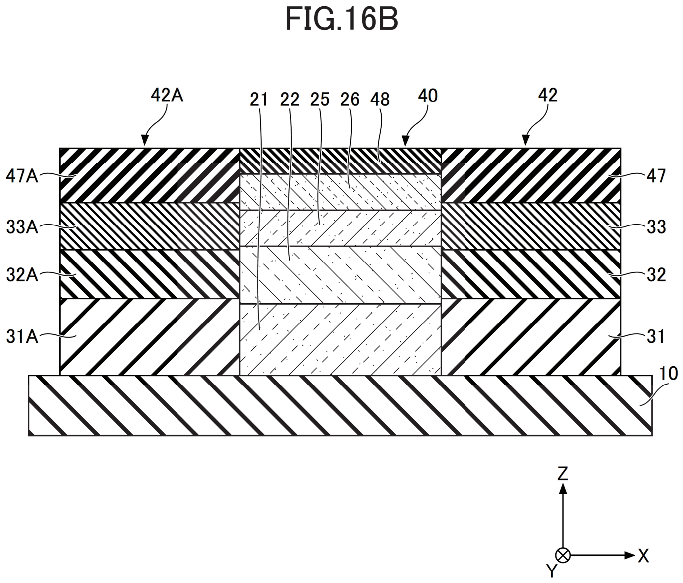

As illustrated in FIG. 16A and 16B, the temporary substrate 46 is removed. The temporary substrate 46 is removed, for example, through etching. Preferably, the temporary substrate 46 is formed of a material that is readily etched with respect to the layered bodies 40 and 42.

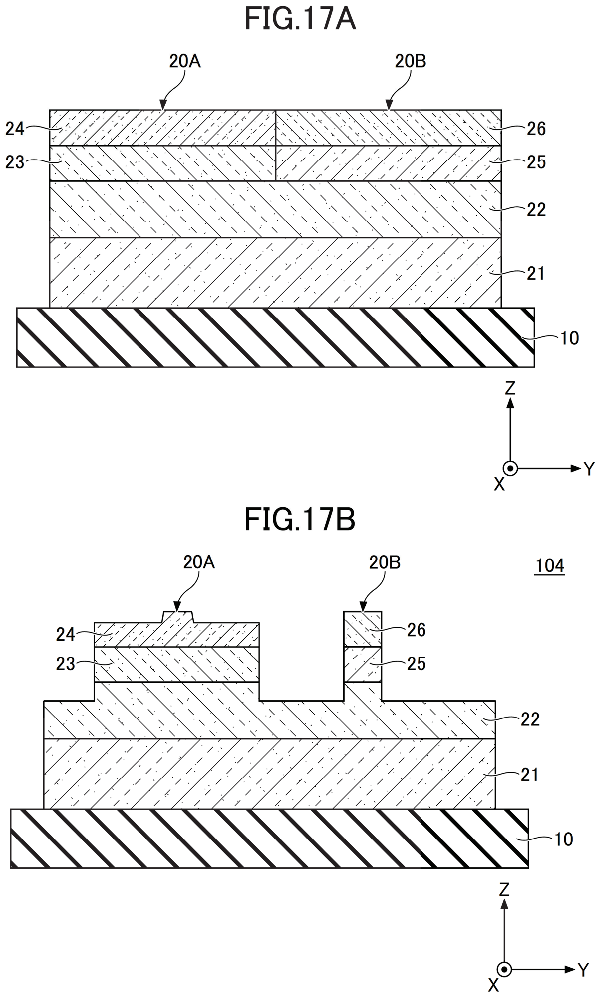

FIG. 17A and 17B are views illustrating the production method of the optical circuit according to the second embodiment, and corresponding to the cross section taken along the line XVIIA-XVIIA of FIG. 8. The protective film 48 on the cladding layers 24 and 26 is removed.

As illustrated in FIG. 17B, desired regions of the cladding layers 24 and 26 are removed through photolithography and etching. This forms ridge structures on the cladding layers 24 and 26. Desired regions of the core layers 23 and 25 are removed through photolithography and etching. This separates the core layers 23 and 25. Thus, the optical waveguides 20A and 20B are separated. Here, the recesses 12A to 12C and the electrodes 13 to 16 illustrated in FIG. 5A and 5B may be formed. Subsequently, an inorganic insulator film, such as a silicon oxide film or the like, may be formed as a protective film to cover the cladding layer 22, the core layers 23 and 25, and the cladding layers 24 and 26. Thus, the optical waveguides 20A and 20B are formed. The optical waveguide 20C is formed in the same manner.

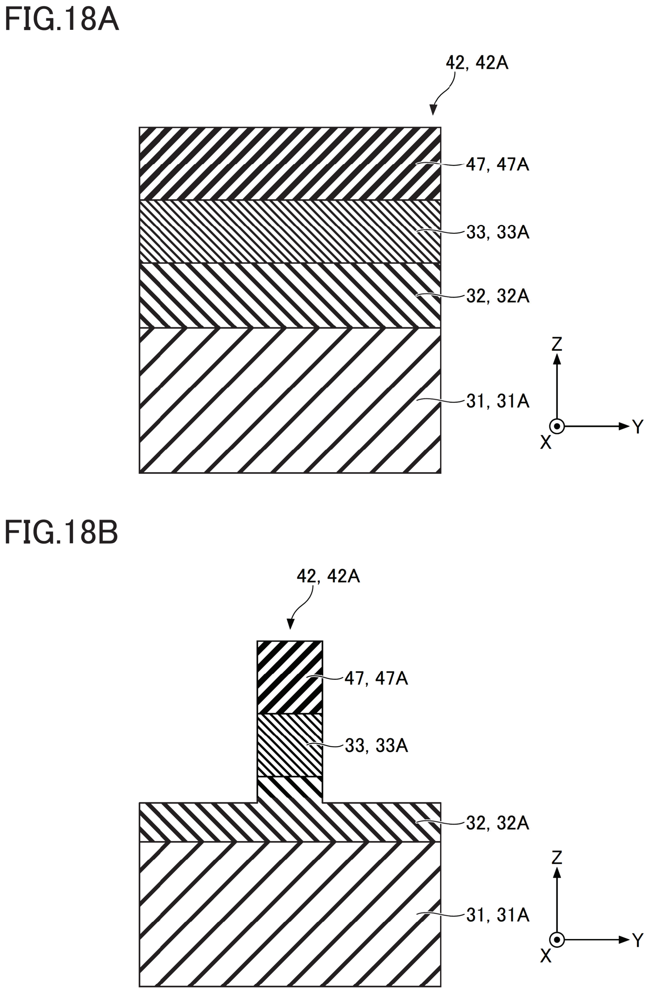

FIG. 18A to 19B are cross-sectional views illustrating the production method of the optical circuit according to the second embodiment, and corresponding to the cross section taken along the line XIIA-XIIA of FIG. 8 and the cross section taken along the line XIIB-XIIB of FIG. 8. As illustrated in FIG. 18A, in the states of FIG. 16A and 16B, the protective films 47 and 47A are formed on the core layers 33 and 33A.

As illustrated in FIG. 18B, the protective films 47 and 47A and the core layers 33 and 33A in the desired regions are removed through photolithography and etching. Here, a recess may be formed in the cladding layer 32.

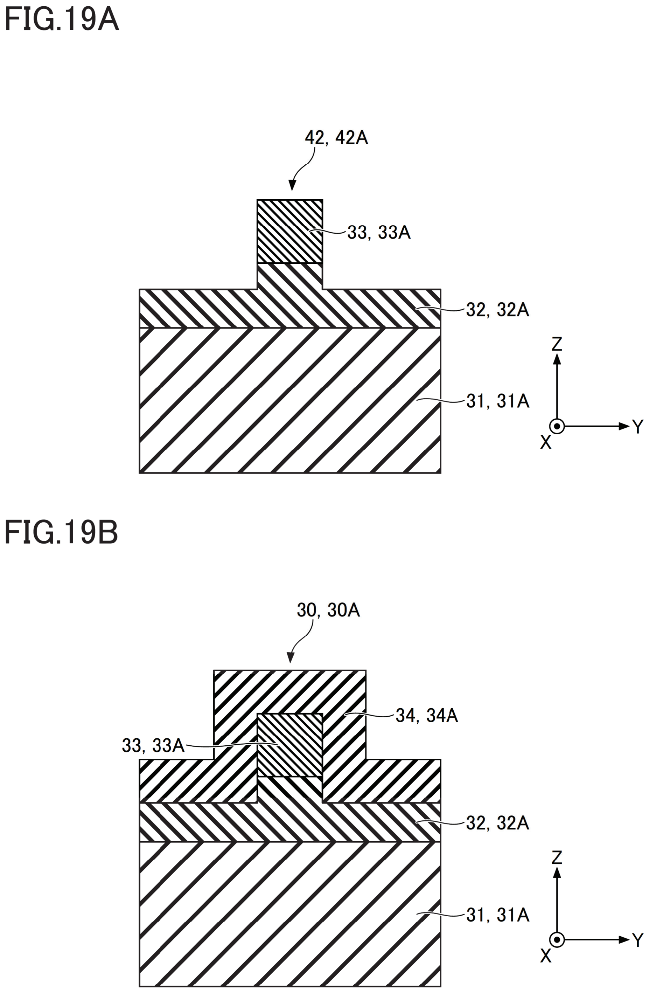

As illustrated in FIG. 19A, the protective films 47 and 47A on the core layers 33 and 33A are removed through etching. As illustrated in FIG. 19B, the cladding layers 34 and 34A are formed on the cladding layer 32 to cover the core layers 33 and 33A. The cladding layers 34 and 34A are formed, for example, through CVD or PVD. At least a portion of the protective films 47 and 47A may be used as at least a portion of the cladding layers 34 and 34A. Thus, the optical circuit 104 of the second embodiment is produced.

According to the second embodiment, as illustrated in FIG. 9A to 11B, the layered body 40 (i.e., a first layered body) including the layered structure 40A (i.e., a first portion) and the layered structure 40B (i.e., a second portion) is provided. As illustrated in FIG. 12A, the layered body 42 (i.e., a second layered body) is provided. As illustrated in FIG. 13A and 13B, the layered bodies 40 and 42 are disposed such that the core layers 23 and 25 face the core layer 33, thereby adhering the cladding layers 24 and 26 and the protective film 47 to the temporary substrate 46. As illustrated in FIG. 15A and 15B, the substrates 21 and 31 are bonded to the substrate 10 (i.e., a common substrate). As illustrated in FIG. 16A and 16B, the temporary substrate 46 is removed. As illustrated in FIG. 17A and 17B, the layered body 40 is processed to obtain the optical waveguides 20A and 20B. As illustrated in FIG. 18A to 19B, the layered body 42 is processed to obtain the optical waveguides 30. The production method described above can produce the optical circuit 104 in which the optical waveguides 20A and 20B and the optical waveguide 30 are optically coupled.

As illustrated in FIG. 11B, the layered body 40 is obtained through cleavage along the Y direction. As a result, the end surfaces of the core layers 23, 25, and 27 are cleaved surfaces with which the flatness of the end surfaces of the core layers 23, 25, and 27 is improved. Therefore, it is possible to improve the coupling efficiency between the optical waveguides 20A and 20B and the optical waveguide 30.

As illustrated in FIG. 12B, the layered body 42A (i.e., a third layered body) is provided. As illustrated in FIG. 13B, the layered body 42A is disposed opposite to the layered body 42 with respect to the layered body 40 such that the core layer 33 faces the core layer 33A, and then the layered body 42A is adhered to the temporary substrate 46. As illustrated in FIG. 13A and 13B, the protective film 47A is adhered to the temporary substrate 46. As illustrated in FIG. 18A to 19B, the layered body 42A is processed to obtain the optical waveguide 30A including at least the cladding layer 32A and the core layer 33A and optically coupled to the optical waveguide 20B. The production method described above can produce the optical circuit 104 in which the optical waveguide 20B and the optical waveguide 30A are optically coupled.

### (Third Embodiment)

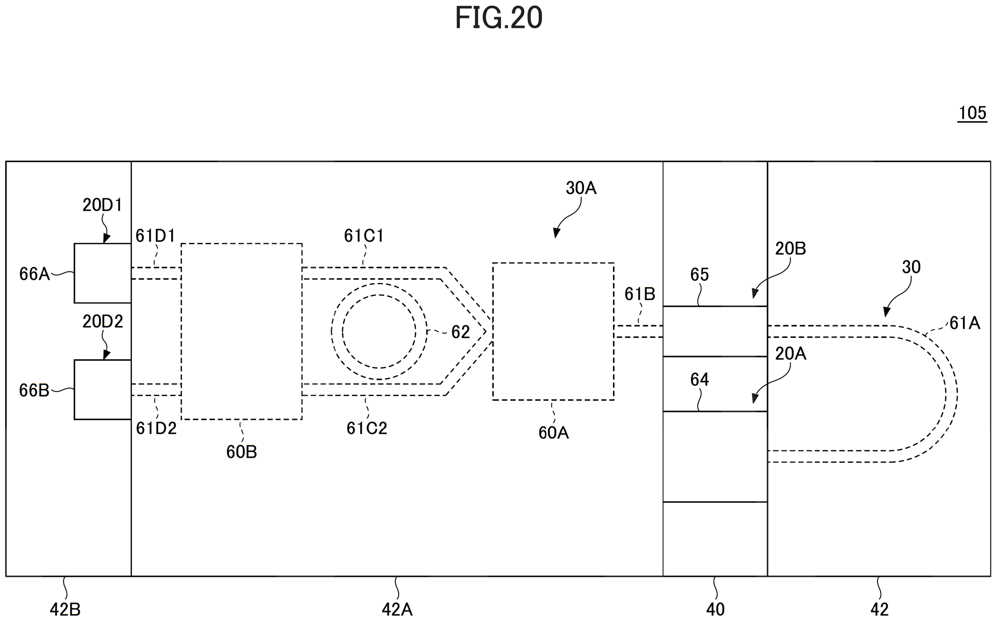

The third embodiment is an example of an optical gyro sensor using the first embodiment and the modified example of the first embodiment. FIG. 20 is a plan view illustrating an optical circuit according to the third embodiment. As illustrated in FIG. 20, an optical circuit 105 according to the third embodiment includes the layered bodies 40, 42, 42A, and 42B. The layered body 40 includes a laser light source 64 as the optical waveguide 20A, and an optical modulator 65 as the optical waveguide 20B. The layered body 42 includes the optical waveguide 30. The optical waveguide 30 forms a waveguide 61A. The layered body 42A includes the optical waveguide 30A. The optical waveguide 30A forms optical branch circuits 60A and 60B, waveguides 61B, 61C1, 61C2, 61D1, and 61D2, and a ring resonator 62. The layered body 42B includes optical waveguides 20D1 and 20D2. The optical waveguides 20D1 and 20D2 are light receiving elements 66A and 66B, respectively.

Laser light emitted from the laser light source 64 is incident on the optical modulator 65 through the waveguide 61A. The optical modulator 65 modulates the phase of the incident light. The optical branch circuit 60A branches the light emitted from the optical modulator 65 into the waveguides 61C1 and 61C2 at an intensity ratio of 1:1. The waveguides 61C1 and 61C2 are optically coupled to the ring resonator 62. The light traveling through the waveguide 61C1 rotates through the ring resonator 62 counterclockwise, and the light traveling through the waveguide 61C2 rotates through the ring resonator 62 clockwise. When the optical circuit 105 rotates, the optical path length of the light rotating through the ring resonator 62 clockwise and the optical path length of the light rotating through the ring resonator 62 counterclockwise are different due to a Sagnac effect. That is, when the optical circuit 105 rotates, the frequency of the light rotating through the ring resonator 62 clockwise and the frequency of the light rotating through the ring resonator 62 counterclockwise are different from each other.

The laser light of the waveguides 61C1 and 61C2 is incident on the optical branch circuit 60B. When the optical circuit 105 rotates, the phases of two types of the light incident on the optical branch circuit 60B are different from each other. The optical branch circuit 60B is an interferometer, and causes the laser light of the waveguide 61C1 and the laser light of the waveguide 61C2 to interfere with each other. This causes a difference in intensity between the laser light emitted from the optical branch circuit 60B to the waveguide 61D1 and the laser light emitted from the optical branch circuit 60B to the waveguide 61D2. The light receiving elements 66A and 66B monitor the light emitted from the waveguides 61D1 and 61D2. The rotation of the optical circuit 105 can be detected based on the output signals of the light receiving elements 66A and 66B. Although the rotation of the optical circuit 105 can be detected by only one of the light receiving element 66A or 66B, it is possible to increase detection accuracy by performing detection using both the light receiving elements 66A and 66B.

### (First Modified Example of Third Embodiment)

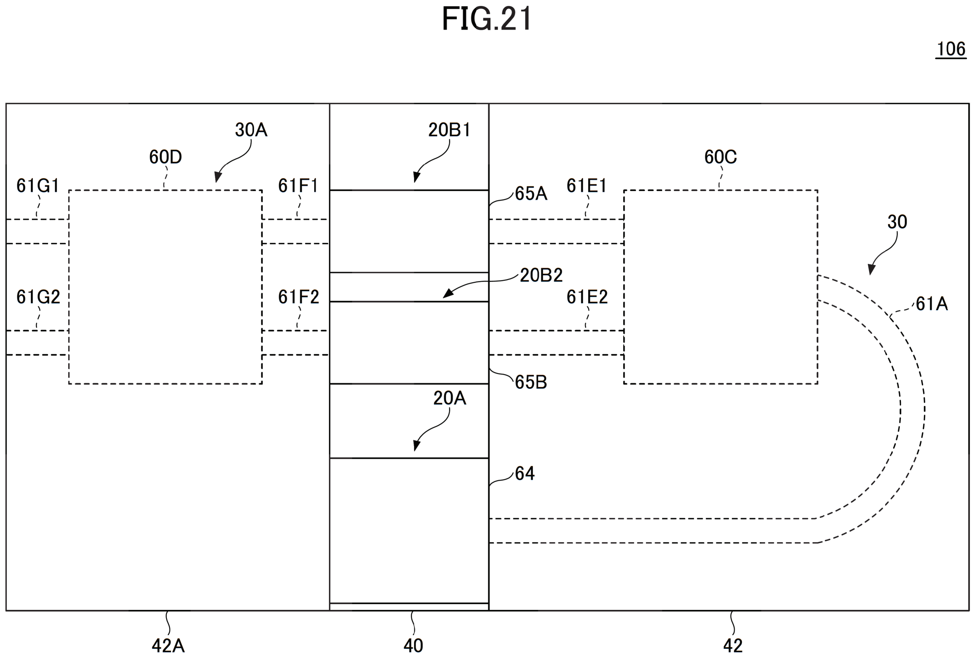

A first modified example of the third embodiment is an example of a light intensity control circuit using the first embodiment and the modified example of the first embodiment. FIG. 21 is a plan view illustrating an optical circuit according to the first modified example of the third embodiment. As illustrated in FIG. 21, an optical circuit 106 according to the first modified example of the third embodiment includes the layered bodies 40, 42, and 42A. The layered body 40 includes the laser light source 64 as the optical waveguide 20A, and optical modulators 65A and 65B as optical waveguides 20B1 and 20B2. The layered body 42 includes the optical waveguide 30. The optical waveguide 30 forms an optical branch circuit 60C, the waveguide 61A, and waveguides 61E1 and 61E2. The layered body 42A includes the optical waveguide 30A. The optical waveguide 30A forms an optical branch circuit 60D, and waveguides 61F1, 61F2, 61G1, and 61G2.

The laser light emitted from the laser light source 64 is incident on the optical branch circuit 60C through the waveguide 61A. The light incident on the optical branch circuit 60C is branched into the waveguides 61E1 and 61E2. The light of the waveguide 61E1 and the light of the waveguide 61E2 are respectively incident on the optical modulators 65A and 65B. The optical modulators 65A and 65B each independently modulate the phase of the light emitted from the waveguides 61E1 and 61E2. The light output from the optical modulators 65A and 65B is incident on the optical branch circuit 60D through the waveguides 61F1 and 61F2. The optical branch circuit 60D causes the light incident from the waveguides 61F1 and 61F2 to interfere with each other, and outputs the light to the waveguides 61G1 and 61G2.

Due to the difference in the phase of light between the optical modulators 65A and 65B, it is possible to control the intensity of light output to the waveguides 61G1 and 61G2. The optical branch circuits 60A and 60B of the third embodiment and the optical branch circuits 60C and 60D of the first modified example of the third embodiment can be appropriately selected from, for example, a directional coupler, a Y-shaped waveguide, a multimode interference-type branch circuit, and the like.

### (Second Modified Example of Third Embodiment)

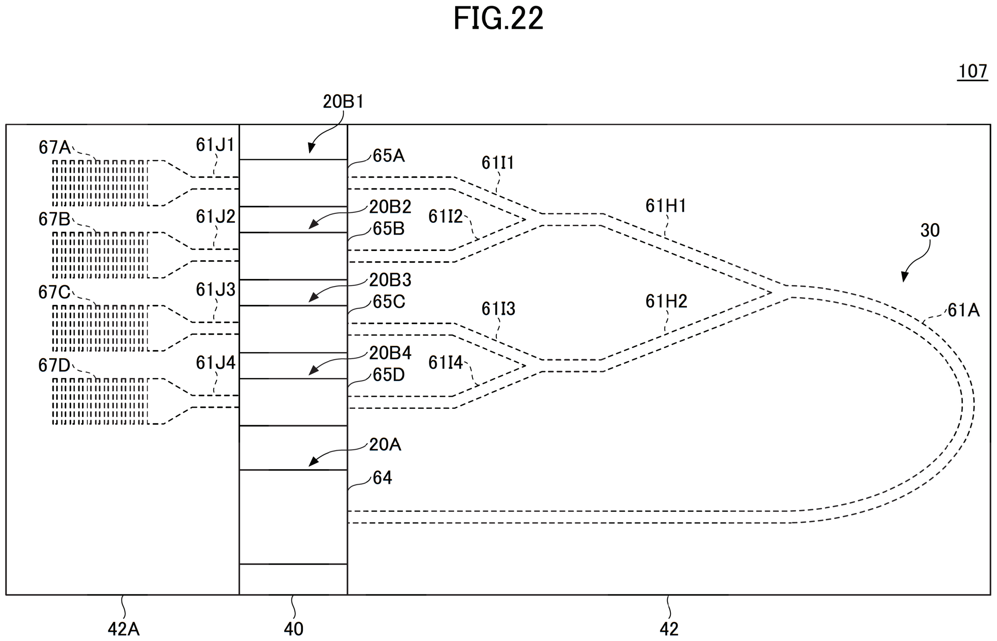

A second modified example of the third embodiment is an example of an optical circuit that enables beam steering using the first embodiment and the modified example of the first embodiment. FIG. 22 is a plan view illustrating the optical circuit according to the second modified example of the third embodiment. As illustrated in FIG. 22, an optical circuit 107 according to the second modified example of the third embodiment includes the layered bodies 40, 42, and 42A. The layered body 40 includes the laser light source 64 as the optical waveguide 20A, and the optical modulators 65A to 65D as the optical waveguides 20B1 and 20B2 and optical waveguides 20B3 and 20B4. The layered body 42 includes the optical waveguide 30. The optical waveguide 30 forms the waveguide 61A and the waveguides 61H1, 61H2, and 61I1 to 61I4. The layered body 42A includes the optical waveguide 30A. The optical waveguide 30A forms grating couplers 67A to 67D and waveguides 61J1 to 61J4.

Laser light emitted from the laser light source 64 is branched to the waveguides 61H1 and 61H2 from the waveguide 61A, and further branched to the waveguides 61I1 to 61I4. The light from the waveguides 61I1 to 61I4 is incident on the optical modulators 65A and 65B and optical modulators 65C and 65D. The optical modulators 65A to 65D each independently modulate the phase of the light emitted from the waveguides 61I1 to 61I4. The light output from the optical modulators 65A to 65D is incident on the grating couplers 67A to 67D through the waveguides 61J1 to 61J4. The grating couplers 67A to 67D emit the light into a space.

Because the optical modulators 65A to 65D modulate the phase of the light, the light output from the grating couplers 67A to 67D interferes with each other. This enables beam steering of the light output from the grating couplers 67A to 67D. Although an example in which the number of the grating couplers 67A to 67D is four and the number of the optical modulators 65A to 65D is four is explained above, the number of the grating couplers 67A to 67D only needs to be two or more and the number of the optical modulators 65A to 65D only needs to be two or more.

### (Third Modified Example of Third Embodiment)

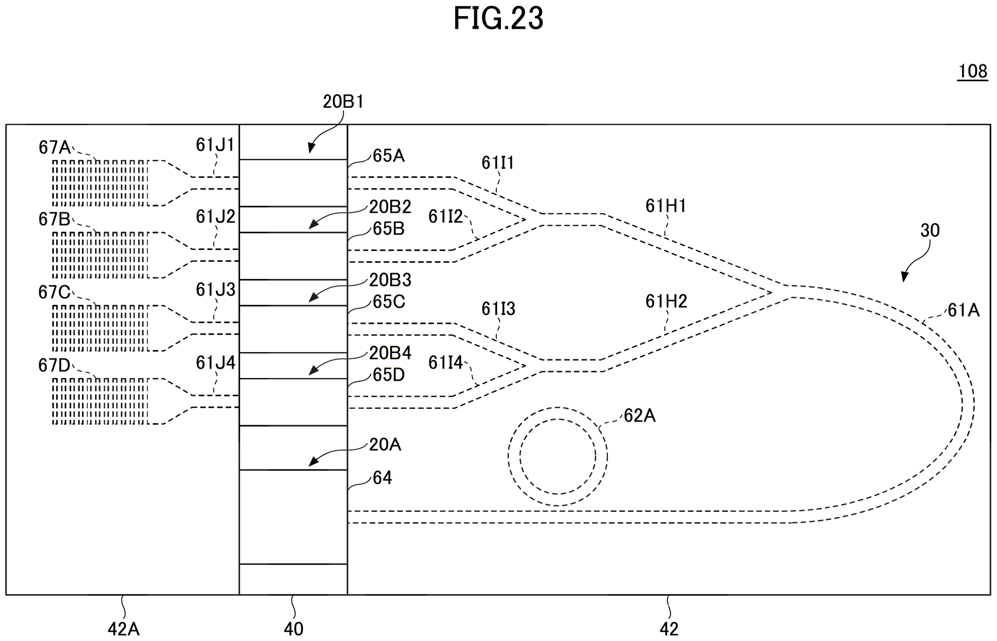

FIG. 23 is a plan view illustrating an optical circuit according to the third modified example of the third embodiment. As illustrated in FIG. 23, in an optical circuit 108 according to the third modified example of the third embodiment, the optical waveguide 30 includes a ring resonator 62A. The ring resonator 62A is optically coupled to the waveguide 61A. The ring resonator 62A is a wavelength filter, and performs wavelength filtering of the light emitted from the laser light source 64. This can generate laser light having a spectral width narrower than the spectral width of the second modified example illustrated in FIG. 22. Other configurations are the same as the configurations of the third modified example of the third embodiment, and description thereof is omitted.

Although the embodiments and the like have been described above in detail, possible embodiments are not limited to the above-described embodiments and the like. Various modifications and substitutions can be added to the above-described embodiments and the like without departing from the scope of the claims.

The present disclosure includes the following configurations.

### (Clause 1)

An optical circuit comprising:
a first optical waveguide comprising a first cladding layer, a second cladding layer, and a first core layer disposed between the first cladding layer and the second cladding layer;
a second optical waveguide comprising a third cladding layer, a fourth cladding layer, and a second core layer disposed between the third cladding layer and the fourth cladding layer; and
a third optical waveguide comprising a fifth cladding layer, a sixth cladding layer, and a third core layer disposed between the fifth cladding layer and the sixth cladding layer, wherein:
   the first cladding layer and the third cladding layer are provided on a first substrate,
   the fifth cladding layer is provided on a second substrate formed of a material different from a material of the first substrate, and
   the third optical waveguide optically couples the first optical waveguide and the second optical waveguide to each other in a second direction that is different from a first direction in which the first optical waveguide and the second optical waveguide are disposed side by side.

### (Clause 2)

The optical circuit according to clause 1, wherein:
a material of the first core layer comprises a nitride semiconductor.

### (Clause 3)

The optical circuit according to clauses 1 or 2, wherein:
the first cladding layer and the third cladding layer are parts of a monolithic cladding layer, and
the optical circuit further comprises:
   a first electrode connected to the first cladding layer,
   a second electrode connected to the second cladding layer,
   a third electrode connected to the third cladding layer, and
   a fourth electrode connected to the fourth cladding layer.

### (Clause 4)

The optical circuit according to clause 3, wherein:
the monolithic cladding layer includes a first recess between the first optical waveguide and the second optical waveguide that are disposed side by side in the first direction.

### (Clause 5)

The optical circuit according to clause 4, wherein:
the monolithic cladding layer includes:
   a second recess disposed opposite to the first recess with the first optical waveguide being interposed between the second recess and the first recess, and
   a third recess disposed opposite to the first recess with the second optical waveguide being interposed between the first recess and the third recess, and
the first electrode is disposed in the first recess, and the third electrode is disposed in the third recess.

### (Clause 6)

The optical circuit according to any one of clauses 4, wherein:
the monolithic cladding layer includes:
   a second recess disposed opposite to the first recess with the first optical waveguide being interposed between the second recess and the first recess, and
   a third recess disposed opposite to the first recess with the second optical waveguide being interposed between the first recess and the third recess, and
the first electrode is disposed in the second recess, and the third electrode is disposed in the third recess.

### (Clause 7)

The optical circuit according to any one of clauses 1 to 6, further comprising:
a first amorphous optical waveguide disposed between the first optical waveguide and the third optical waveguide; and
a second amorphous optical waveguide disposed between the second optical waveguide and the third optical waveguide.

### (Clause 8)

The optical circuit according to any one of clauses 1 to 7, wherein:
each of the third core layer, the fifth cladding layer, and the sixth cladding layer comprises an oxide, a nitride, or a fluoride.

### (Clause 9)

The optical circuit according to any one of clauses 1 to 8, wherein:
the first cladding layer comprises AlₓGa₁₋ₓN (0≤x≤1).

### (Clause 10)

The optical circuit according to any one of clauses 1 to 9, wherein:
the fourth cladding layer comprises a nitride semiconductor, and
the second core layer is a single layer of undoped GaN or comprises a quantum well of Al_{y}Ga_{1-y}N (0≤y≤1) and In_{z}Ga_{1-z}N (0≤z≤1, excepting for y=0 and z=0).

### (Clause 11)

The optical circuit according to any one of clauses 1 to 10, further comprising:
a fourth optical waveguide comprising a seventh cladding layer, an eighth cladding layer, and a fourth core layer disposed between the seventh cladding layer and the eighth cladding layer, wherein:
the seventh cladding layer is provided on a third substrate that is formed of a material different from the material of the first substrate,
the third substrate is provided opposite to the second substrate with respect to the first substrate, and
the fourth optical waveguide is optically coupled to the second optical waveguide.

### (Clause 12)

The optical circuit according to any one of clauses 1 to 11, wherein:
the fourth optical waveguide comprises a grating coupler.

### (Clause 13)

The optical circuit according to any one of clauses 1 to 11, further comprising:
a ring resonator on the second substrate, the ring resonator being optically coupled to the third optical waveguide, wherein:
the ring resonator is a wavelength filter of the first optical waveguide.

### (Clause 14)

The optical circuit according to clause 13, wherein:
the fourth optical waveguide comprises an optical branch circuit.

### (Clause 15)

The optical circuit according to clause 14, wherein:
the fourth optical waveguide further comprises a ring resonator and an interferometer, and
the optical circuit comprises a light receiving element configured to monitor an output from the interferometer.

### (Clause 16)

A production method of an optical circuit, the production method comprising:
providing a first layered body on a first substrate, the first layered body comprising a first portion and a second portion, wherein the first portion comprises a first cladding layer, a first core layer on the first cladding layer, and a second cladding layer on the first core layer, and wherein the second portion comprises a third cladding layer, a second core layer on the third cladding layer, and a fourth cladding layer on the second core layer;
providing a second layered body on a second substrate, the second layered body comprising a fifth cladding layer, a third core layer on the fifth cladding layer, and a protective film on the third core layer;
disposing the first layered body and the second layered body such that the first core layer and the second core layer face the third core layer, and adhering the second cladding layer, the fourth cladding layer, and the protective film to a temporary substrate;
bonding the first substrate and the second substrate to a common substrate;
after bonding the first substrate and the second substrate to the common substrate, removing the temporary substrate;
obtaining a first optical waveguide and a second optical waveguide by processing the first layered body, wherein the first optical waveguide comprises the first cladding layer, the first core layer, and the second cladding layer, and wherein the second optical waveguide comprises the third cladding layer, the second core layer, and the fourth cladding layer; and
obtaining a third optical waveguide by processing the second layered body, wherein the third optical waveguide comprises at least the fifth cladding layer and the third core layer, and wherein the third optical waveguide is optically coupled to the first optical waveguide and the second optical waveguide.

### (Clause 17)

The production method of the optical circuit according to clause 16, wherein:
the first portion and the second portion of the first layered body are obtained through cleavage along a first direction in which the first portion and the second portion are disposed side by side.

### (Clause 18)

The production method of the optical circuit according to clauses 16 or 17, further comprising:
providing a third layered body on a third substrate, the third layered body comprising a seventh cladding layer on the third substrate, a fourth core layer on the seventh cladding layer, and the protective film on the fourth core layer;
disposing the third layered body opposite to the second layered body with respect to the first layered body such that the second core layer faces the fourth core layer, and adhering protective film to the temporary substrate; and
after removal of the temporary substrate following the bonding to the common substrate, obtaining a fourth optical waveguide by processing the third layered body, wherein the fourth optical waveguide comprises at least the seventh cladding layer and the fourth core layer and is optically coupled to the second optical waveguide.

### REFERENCE SIGNS LIST

- 10,21,31,31A:: Substrate
- 12A,12B,12C:: Recess
- 13,14,15,16:: Electrode
- 20A,20B,20B1,20B2,20B3,20B4,20C,20D1,20D2,30,30A:: Optical waveguide
- 22,24,26,32,32A,34,34A,37A,37B,37C,39A,39B,39C:: Cladding layer
- 23,25,27,33,33A,38A,38B,38C:: Core layer
- 35A,35B,35C:: Waveguide
- 40,42,42A,42B:: Layered body
- 40A,40B,40C:: Layered body
- 60A,60B,60C,60D:: Optical branch circuit
- 62,62A:: Ring resonator
- 64:: Laser light source
- 65,65A,65B,65C,65D:: Optical modulator
- 67A,67B,67C,67D:: Grating coupler

## Claims

1. An optical circuit comprising:
a first optical waveguide comprising a first cladding layer, a second cladding layer, and a first core layer disposed between the first cladding layer and the second cladding layer;
a second optical waveguide comprising a third cladding layer, a fourth cladding layer, and a second core layer disposed between the third cladding layer and the fourth cladding layer; and
a third optical waveguide comprising a fifth cladding layer, a sixth cladding layer, and a third core layer disposed between the fifth cladding layer and the sixth cladding layer, wherein:
the first cladding layer and the third cladding layer are provided on a first substrate,
the fifth cladding layer is provided on a second substrate formed of a material different from a material of the first substrate, and
the third optical waveguide optically couples the first optical waveguide and the second optical waveguide to each other in a second direction that is different from a first direction in which the first optical waveguide and the second optical waveguide are disposed side by side.

2. The optical circuit as claimed in claim 1, wherein:
a material of the first core layer comprises a nitride semiconductor.

3. The optical circuit as claimed in claims 1 or 2, wherein:
the first cladding layer and the third cladding layer are parts of a monolithic cladding layer, and
the optical circuit further comprises:
a first electrode connected to the first cladding layer,
a second electrode connected to the second cladding layer,
a third electrode connected to the third cladding layer, and
a fourth electrode connected to the fourth cladding layer.

4. The optical circuit as claimed in claim 3, wherein:
the monolithic cladding layer includes a first recess between the first optical waveguide and the second optical waveguide that are disposed side by side in the first direction.

5. The optical circuit as claimed in claim 4, wherein:
the monolithic cladding layer includes:
a second recess disposed opposite to the first recess with the first optical waveguide being interposed between the second recess and the first recess, and
a third recess disposed opposite to the first recess with the second optical waveguide being interposed between the first recess and the third recess, and
the first electrode is disposed in the first recess, and the third electrode is disposed in the third recess.

6. The optical circuit as claimed in claim 4, wherein:
the monolithic cladding layer includes:
a second recess disposed opposite to the first recess with the first optical waveguide being interposed between the second recess and the first recess, and
a third recess disposed opposite to the first recess with the second optical waveguide being interposed between the first recess and the third recess, and
the first electrode is disposed in the second recess, and the third electrode is disposed in the third recess.

7. The optical circuit as claimed in any one of claims 1 to 6, further comprising:
a first amorphous optical waveguide disposed between the first optical waveguide and the third optical waveguide; and
a second amorphous optical waveguide disposed between the second optical waveguide and the third optical waveguide.

8. The optical circuit as claimed in any one of claims 1 to 7, wherein:
each of the third core layer, the fifth cladding layer, and the sixth cladding layer comprises an oxide, a nitride, or a fluoride.

9. The optical circuit as claimed in any one of claims 1 to 8, wherein:
the first cladding layer comprises AlₓGa₁₋ₓN (0≤x≤1).

10. The optical circuit as claimed in any one of claims 1 to 9, wherein:
the fourth cladding layer comprises a nitride semiconductor, and
the second core layer is a single layer of undoped GaN or comprises a quantum well of Al_{y}Ga_{1-y}N (0≤y≤1) and In_{z}Ga_{1-z}N (0≤z≤1, excepting for y=0 and z=0).

11. The optical circuit as claimed in any one of claims 1 to 10, further comprising:
a fourth optical waveguide comprising a seventh cladding layer, an eighth cladding layer, and a fourth core layer disposed between the seventh cladding layer and the eighth cladding layer, wherein:
the seventh cladding layer is provided on a third substrate that is formed of a material different from the material of the first substrate,
the third substrate is provided opposite to the second substrate with respect to the first substrate, and
the fourth optical waveguide is optically coupled to the second optical waveguide.

12. The optical circuit as claimed in claim 11, wherein:
the fourth optical waveguide comprises a grating coupler.

13. The optical circuit as claimed in any one of claims 1 to 12, further comprising:
a ring resonator on the second substrate, the ring resonator being optically coupled to the third optical waveguide, wherein:
the ring resonator is a wavelength filter of the first optical waveguide.

14. The optical circuit as claimed in claim 11, wherein:
the fourth optical waveguide comprises an optical branch circuit.

15. The optical circuit as claimed in claim 14, wherein:
the fourth optical waveguide further comprises a ring resonator and an interferometer, and
the optical circuit comprises a light receiving element configured to monitor an output from the interferometer.

16. A production method of an optical circuit, the production method comprising:
providing a first layered body on a first substrate, the first layered body comprising a first portion and a second portion, wherein the first portion comprises a first cladding layer, a first core layer on the first cladding layer, and a second cladding layer on the first core layer, and wherein the second portion comprises a third cladding layer, a second core layer on the third cladding layer, and a fourth cladding layer on the second core layer;
providing a second layered body on a second substrate, the second layered body comprising a fifth cladding layer, a third core layer on the fifth cladding layer, and a protective film on the third core layer;
disposing the first layered body and the second layered body such that the first core layer and the second core layer face the third core layer, and adhering the second cladding layer, the fourth cladding layer, and the protective film to a temporary substrate;
bonding the first substrate and the second substrate to a common substrate;
after bonding the first substrate and the second substrate to the common substrate, removing the temporary substrate;
obtaining a first optical waveguide and a second optical waveguide by processing the first layered body, wherein the first optical waveguide comprises the first cladding layer, the first core layer, and the second cladding layer, and wherein the second optical waveguide comprises the third cladding layer, the second core layer, and the fourth cladding layer; and
obtaining a third optical waveguide by processing the second layered body, wherein the third optical waveguide comprises at least the fifth cladding layer and the third core layer, and wherein the third optical waveguide is optically coupled to the first optical waveguide and the second optical waveguide.

17. The production method of the optical circuit as claimed in claim 16, wherein:
the first portion and the second portion of the first layered body are obtained through cleavage along a first direction in which the first portion and the second portion are disposed side by side.

18. The production method of the optical circuit as claimed in claims 16 or 17, further comprising:
providing a third layered body on a third substrate, the third layered body comprising a seventh cladding layer on the third substrate, a fourth core layer on the seventh cladding layer, and the protective film on the fourth core layer;
disposing the third layered body opposite to the second layered body with respect to the first layered body such that the second core layer faces the fourth core layer, and adhering protective film to the temporary substrate; and
after removal of the temporary substrate following the bonding to the common substrate, obtaining a fourth optical waveguide by processing the third layered body, wherein the fourth optical waveguide comprises at least the seventh cladding layer and the fourth core layer and is optically coupled to the second optical waveguide.
